(19) **Europäisches Patentamt / European Patent Office / Office européen des brevets**

(11) **EP 4 145 586 B1**

(12) **EUROPEAN PATENT SPECIFICATION**

(45) Date of publication and mention
of the grant of the patent:
**15.04.2026 Bulletin 2026/16**

(21) Application number: **20933001.8**

(22) Date of filing: **27.04.2020**

(51) International Patent Classification (IPC):
*H01M 10/44* (2006.01)    *H01M 10/48* (2006.01)
*H02J 7/00* (2026.01)    *H01M 10/0525* (2010.01)
*H01M 10/42* (2006.01)

(52) Cooperative Patent Classification (CPC):
**H02J 7/80; H01M 10/0525; H01M 10/44;**
**H01M 10/441; H01M 10/443; H01M 10/48;**
**H01M 10/486; H02J 7/82;** H01M 2010/4271;
H02J 7/50; Y02E 60/10

(86) International application number:
**PCT/JP2020/017994**

(87) International publication number:
**WO 2021/220350 (04.11.2021 Gazette 2021/44)**

(54) **OUTPUT CONTROL METHOD FOR SECONDARY BATTERY AND OUTPUT CONTROL SYSTEM FOR SECONDARY BATTERY**

AUSGABESTEUERUNGSVERFAHREN FÜR SEKUNDÄRBATTERIE UND
AUSGABESTEUERUNGSSYSTEM FÜR SEKUNDÄRBATTERIE

PROCÉDÉ DE COMMANDE DE SORTIE POUR BATTERIE SECONDAIRE ET SYSTÈME DE
COMMANDE DE SORTIE POUR BATTERIE SECONDAIRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**08.03.2023 Bulletin 2023/10**

(73) Proprietor: **NISSAN MOTOR CO., LTD.**
**Kanagawa 221-0023 (JP)**

(72) Inventors:
• **TANIGUCHI, Ikuhiro**
**Atsugi-shi, Kanagawa 243-0123 (JP)**
• **IGUCHI, Toyoki**
**Atsugi-shi, Kanagawa 243-0123 (JP)**
• **HIRAI, Ayaka**
**Atsugi-shi, Kanagawa 243-0123 (JP)**
• **OGAWA, Hiroshi**
**Atsugi-shi, Kanagawa 243-0021 (JP)**

(74) Representative: **Grünecker Patent- und**
**Rechtsanwälte**
**PartG mbB**
**Leopoldstraße 4**
**80802 München (DE)**

(56) References cited:
WO-A1-2010/109956    WO-A1-2012/169063
JP-A- 2002 272 011    JP-A- 2004 031 014
JP-A- 2008 104 289    US-A1- 2007 145 954

**Description**

The present invention relates to an output control method for controlling output of a secondary battery, and an output control system.

In the related art, there is a technique for controlling output of a secondary battery such as a lithium ion battery. For example, there is a technique for setting an upper limit of available output power according to a temperature of a secondary battery. For example, JP2007-165211A discloses a technique of obtaining maximum allowable discharge power of a secondary battery with respect to a maximum temperature and a minimum temperature of the secondary battery, and selecting the smaller maximum allowable discharge power. Further, WO 2012/169063A1 discloses a battery control apparatus that obtains permissible charging or discharging power.

In the above technique in the related art, the maximum temperature and the minimum temperature of the secondary battery are detected by a temperature sensor arranged in a battery pack. However, unless all cells of the secondary battery is provided with the temperature sensor, temperature variation of the secondary battery cannot be detected properly, and a voltage of a low temperature cell may drop beyond an allowable range, resulting in over-discharge. On the other hand, it is assumed that it is difficult to install the temperature sensor in all the cells of the secondary battery due to limitation of layout in the battery pack or increase of a manufacturing cost. Therefore, it is important to control the output of the secondary battery by appropriately setting the available output power of the secondary battery while reducing the manufacturing cost.

Therefore, an object of the present invention is to appropriately control the output of the secondary battery.

This is achieved by the features of the independent claims.

[FIG. 1] FIG. 1 is a block diagram showing a configuration example of a battery output control system according to a first embodiment.

[FIG. 2] FIG. 2 is a diagram showing an example of a relation between CCV and OCV used in OCV calculation process.

[FIG. 3] FIG. 3 is a diagram showing a relation between a battery temperature and an internal resistance used in the OCV calculation process.

[FIG. 4] FIG. 4 is a time chart showing an example of a relation between output power and a cell voltage of a lithium ion battery.

[FIG. 5] FIG. 5 is a diagram showing a rate characteristic of the lithium ion battery.

[FIG. 6] FIG. 6 is a diagram showing an output characteristic of the lithium ion battery.

[FIG. 7] FIG. 7 is a flowchart showing an example of a processing procedure of output control process executed by the battery output control system.

[FIG. 8] FIG. 8 is a block diagram showing a functional configuration example of a battery output control system according to a second embodiment.

[FIG. 9] FIG. 9 is a flowchart showing an example of a processing procedure of output control process executed by the battery output control system.

[FIG. 10] FIG. 10 is a block diagram showing a functional configuration example of a battery output control system according to a third embodiment.

[FIG. 11] FIG. 11 is a diagram schematically showing a temperature correction method by a temperature correction unit.

[FIG. 12] FIG. 12 is a diagram showing an example of a calculation method of calculating an initial SOC from an initial OCV.

[FIG. 13] FIG. 13 is a diagram showing an example of an OCV calculation method by an OCV calculation unit.

[FIG. 14] FIG. 14 is a diagram showing an example of setting power limit following performance by a power limit following performance setting unit.

[FIG. 15] FIG. 15 is a time chart showing movement of SOC and available output power Pout.

[FIG. 16] FIG. 16 is a flowchart showing an example of a processing procedure of output control process executed by the battery output control system.

[FIG. 17] FIG. 17 is a block diagram showing a functional configuration example of a battery output control system according to a fourth embodiment.

[FIG. 18] FIG. 18 is a diagram showing an example of an available output power calculation map, which indicates correlation among an SOC, a temperature, and available output power.

Hereinafter, embodiments of the present invention will be described with reference to the accompanying drawings.

[First Embodiment]

[Configuration Example of Battery Output Control System]

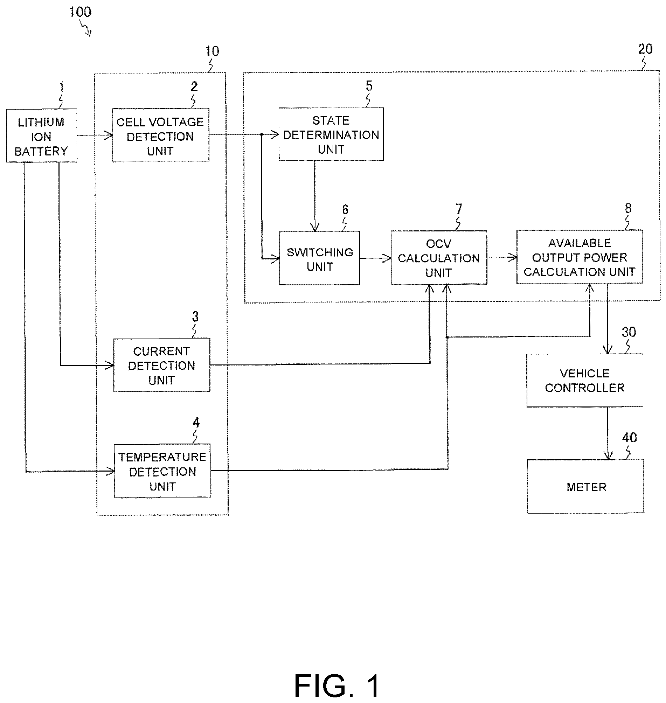

FIG. 1 is a block diagram showing a configuration example of a battery output control system 100 according to the first embodiment. The battery output control system 100 is a system that controls output of a lithium ion battery 1 mounted on a vehicle such as an electric vehicle or a hybrid vehicle. The lithium ion battery 1 supplies power to in-vehicle devices such as a drive motor and auxiliary equipment of the vehicle. The lithium ion battery 1 is also a battery that can be charged by an in-vehicle charger or a charging device outside the vehicle.

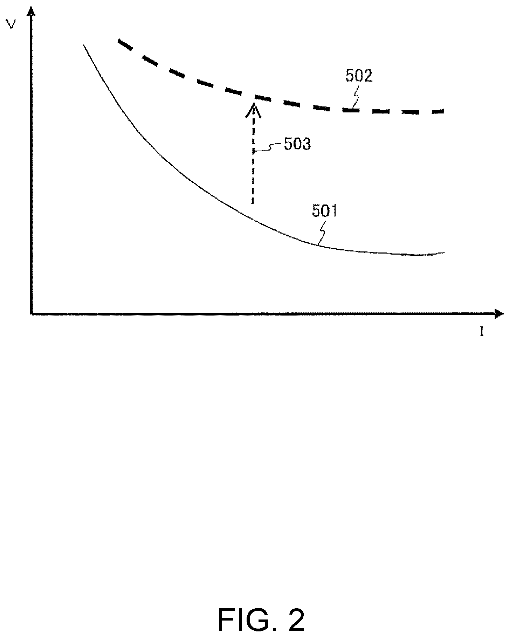

As shown in FIG. 1, the battery output control system 100 includes the lithium ion battery 1, a cell voltage detection unit 2, a current detection unit 3, a temperature detection unit 4, a state determination unit 5, and a switching unit 6, an open circuit voltage (OCV) calculation unit 7, an available output power calculation unit 8, a vehicle controller 30, and a meter 40. The cell voltage detection unit 2, the current detection unit 3, and the temperature detection unit 4 function as an internal state detection unit 10 that detects an internal state of the lithium ion battery 1. The state determination unit 5, the switching unit 6, the OCV calculation unit 7, and the available output power calculation unit 8 are implemented by a lithium battery controller (LBC) 20. Each configuration of the battery output control system 100 will be described with reference to FIGS. 2 to 4 as appropriate.

The LBC 20 is a control device that controls charge and discharge of the lithium ion battery 1, and includes, for example, a microcomputer provided with a central processing unit (CPU), a read only memory (ROM), a random access memory (RAM), and an input/output interface (I/O interface). The LBC 20 functions as a control unit that controls operation of the lithium ion battery 1 by executing a specific program. The LBC 20 may include a plurality of microcomputers instead of including one microcomputer.

FIG. 2 is a diagram showing an example of a relation between a closed circuit voltage (CCV) and an OCV used in OCV calculation process by the OCV calculation unit 7. A vertical axis indicates a voltage V, and a horizontal axis indicates a current I. The CCV is indicated by a solid curve 501, and the OCV is indicated by a dotted curve 502.

As shown in FIG. 2, when the current I flows from the lithium ion battery 1, the voltage CCV drops. The relation between the OCV and the CCV can be obtained by the following Equation 1. A dotted arrow 503 means the current I × an internal resistance R.

$$OCV = CCV + I \times R \quad \text{Equation 1}$$

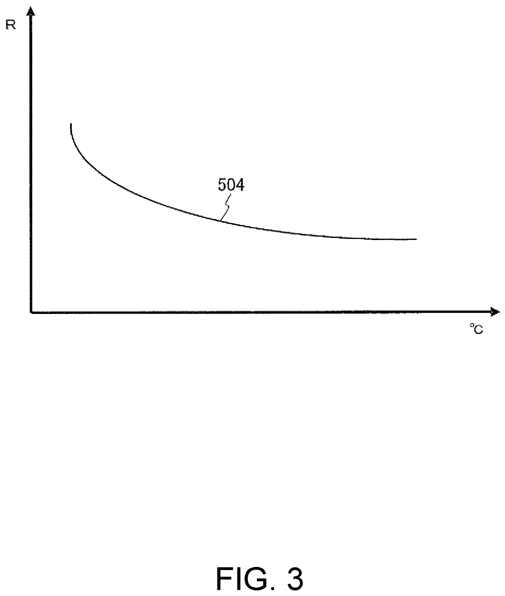

FIG. 3 is a diagram showing a relation between a battery temperature and an internal resistance used in the OCV calculation process by the OCV calculation unit 7. A vertical axis indicates the internal resistance R, and a horizontal axis indicates the battery temperature °C. As indicated by a curve 504 in FIG. 3, the internal resistance R increases as the battery temperature °C decreases. FIGS. 2 and 3 will be described with reference to the OCV calculation unit 7.

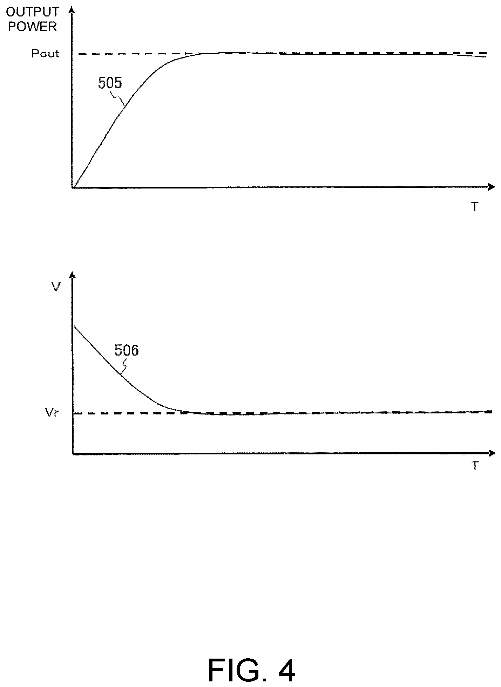

FIG. 4 is a time chart showing an example of a relation between output power and a cell voltage of the lithium ion battery 1. A vertical axis of an upper graph indicates the output power, and a vertical axis of a lower graph indicates the cell voltage. Horizontal axes of both graphs are time axes. "Pout" means, for example, an upper limit value of the output power set so that a battery characteristic of the lithium ion battery 1 is not significantly impaired (so that over-discharge does not occur). Hereinafter, it is also simply referred to as "available output power Pout". In the present embodiment, when charge and discharge characteristics of cells constituting the lithium ion battery 1 described later do not vary, the available output power Pout set so that the lithium ion battery 1 is not over-discharged is also referred to as "basic available output power Pout1". "Vr" means a value (lower limit value) of the cell voltage when the output power takes the available output power Pout. Hereinafter, it is also simply referred to as "target lower limit cell voltage Vr". When power is taken out from the lithium ion battery 1 as indicated by a curve 505, the cell voltage drops as indicated by a curve 506. Therefore, by limiting the power taken out from the lithium ion battery 1 to the available output power Pout, the cell voltage can be maintained at the target lower limit cell voltage Vr. FIG. 4 will be described with reference to the available output power calculation unit 8.

The lithium ion battery 1 is a lithium ion battery that performs charge and discharge by lithium ions moving between a positive electrode and a negative electrode, and includes a plurality of cells electrically connected in series. The lithium ion battery 1 is used, for example, as a power source for driving the vehicle, and is connected to a drive motor via an inverter. In the present embodiment, a lithium ion battery is described as an example, but the present embodiment may also be applied to other secondary batteries such as lead batteries and nickel hydrogen batteries, which have a certain correlation between an operating temperature and an output characteristic.

The cell voltage detection unit 2 is a cell voltage sensor that detects the voltage (CCV) of each cell constituting the lithium ion battery 1, and outputs a detection result to the state determination unit 5 and the switching unit 6. That is, the cell voltage detection unit 2 is installed in all the cells constituting the lithium ion battery 1, and detects the voltage of each cell. In the first embodiment, the voltage of each cell is a charge and discharge characteristic indication amount that changes according to change in the charge and discharge characteristic of each cell.

The current detection unit 3 is a current sensor that detects currents of a charge current and a discharge current of the lithium ion battery 1, and outputs a detection result to the OCV calculation unit 7.

The temperature detection unit 4 is a temperature sensor that detects a temperature inside a battery pack of the lithium ion battery 1, and outputs a detection result to the OCV calculation unit 7 and the available output power calculation unit 8. One temperature sensor may be installed in the lithium ion battery 1, or a plurality of temperature sensors may be installed in the lithium ion battery 1. For example, when one temperature sensor is installed, it is preferable to install the temperature sensor at a position where the temperature is most likely to rise in the lithium ion battery 1, for example, in a central portion. When a plurality of temperature sensors are installed, it is preferable to install the temperature sensors at a position where the temperature is most likely to rise and a position where the temperature is most likely to drop, for example, at end portions of the lithium ion battery 1. When a plurality of temperature sensors are installed, the temperature sensors may also be installed at a position where the temperature is most likely to rise and at a position around the above position of the lithium ion battery 1. When a plurality of temperature sensors are installed in the lithium ion battery 1, an internal resistance calculation unit may use a minimum value of temperatures detected by these temperature sensors to calculate the internal resistance of the lithium ion battery 1.

In this way, the internal state detection unit 10 outputs an internal state detection value indicating the internal state of the lithium ion battery 1.

The state determination unit 5 determines a state difference of the lithium ion battery 1, that is, variation in the charge and discharge characteristic (charge and discharge performance) of each cell, based on each cell voltage output from the cell voltage detection unit 2, and outputs a determination result to the switching unit 6. Specifically, the state determination unit 5 obtains an average cell voltage, which is an average value of the voltages of all the cells constituting the lithium ion battery 1. The state determination unit 5 obtains a minimum cell voltage, which is a minimum cell voltage value among the voltages of all the cells constituting the lithium ion battery 1. Further, the state determination unit 5 calculates a cell voltage difference, which is a difference between the average cell voltage and the minimum cell voltage. Then, the state determination unit 5 determines whether the cell voltage difference has a deviation of a voltage difference threshold value as a predetermined determination reference value or more.

Here, the voltage difference threshold value used in the determination process by the state determination unit 5 is a value by which it can be determined that a predetermined variation occurs in the charge and discharge characteristic (charge and discharge performance) of each cell constituting the lithium ion battery 1. The voltage difference threshold value can be set to, for example, a value of about 10 times a variation range that is assumed to occur inevitably due to factors such as sensor errors or operating environment of the lithium ion battery 1. For example, the cell voltage difference can be set to a value of about 15%. These values can be set using various experimental data.

The switching unit 6 switches the cell voltage used in the OCV calculation based on a determination result of the state difference output from the state determination unit 5, and outputs a switching result to the OCV calculation unit 7. Specifically, when the cell voltage difference is less than the voltage difference threshold value, the switching unit 6 sets the cell voltage used in the OCV calculation to the average cell voltage. When the cell voltage difference is equal to or larger than the voltage difference threshold value, the switching unit 6 sets the cell voltage used in the OCV calculation to the minimum cell voltage.

The OCV calculation unit 7 calculates the OCV per cell based on the cell voltage output from the switching unit 6, the current output from the current detection unit 3, and the temperature output from the temperature detection unit 4, and outputs a calculation result, that is, the OCV, to the available output power calculation unit 8. Specifically, the OCV calculation unit 7 calculates the OCV based on the cell voltage value CCV, the current value I, and the internal resistance R. That is, the OCV calculation unit 7 calculates the OCV using the above Equation 1.

As shown in FIG. 3, the internal resistance R can be obtained based on the temperature output from the temperature detection unit 4. Therefore, the OCV calculation unit 7 sets information shown in FIG. 3 to table values and the like, and uses the information for calculation of the internal resistance R. That is, the OCV calculation unit 7 also functions as an internal resistance calculation unit that calculates the internal resistance of the lithium ion battery 1 based on the temperature detected by the temperature detection unit 4.

When the cell voltage set by the switching unit 6 is the average cell voltage, the OCV calculation unit 7 calculates the OCV using the average cell voltage according to the above Equation 1. When the cell voltage set by the switching unit 6 is the minimum cell voltage, the OCV calculation unit 7 calculates the OCV using the minimum cell voltage according to the above Equation 1.

The available output power calculation unit 8 calculates the available output power based on the OCV output from the OCV calculation unit 7 and the temperature output from the temperature detection unit 4, and outputs a calculation result, that is, the available output power, to the vehicle controller 30.

Specifically, the available output power calculation unit 8 calculates the internal resistance R based on the temperature output from the temperature detection unit 4 in the same manner as the internal resistance calculation process described above. The available output power calculation unit 8 calculates an available output power Pout_c per cell based on the internal resistance R, the OCV calculated by the OCV calculation unit 7, and the target lower limit cell voltage Vr. Specifically, the available output power calculation unit 8 calculates an available output power Pout_c per cell by using the following Equation 2.

$$Pout\_c = I \times Vr = (OCV - Vr)/R \times Vr \quad \text{Equation 2}$$

For example, the target lower limit cell voltage Vr is set with a margin larger than an over-discharge voltage. In the first embodiment, an example in which the target lower limit cell voltage Vr is 2.5 V is shown. In this case, the available output power calculation unit 8 calculates (OCV-2.5 V)/R $\times$ 2.5 V using the above Equation 2. The available output power calculation unit 8 obtains the available output power Pout of the entire battery pack of the lithium ion battery 1 by multiplying the calculated available output power Pout_c per cell by the number of cells.

In this way, the available output power calculation unit 8 calculates the available output power Pout in consideration of the variation in the charge and discharge characteristic of each cell of the lithium ion battery 1. The LBC 20 functions as an available output power calculation device of the lithium ion battery 1.

The vehicle controller 30 is a control device that controls various devices, and includes, for example, a microcomputer provided with a central processing unit (CPU), a read only memory (ROM), a random access memory (RAM), and an input/output interface (I/O interface). The vehicle controller 30 functions as a control unit that controls operation of various devices such as an engine, a motor, an inverter, and a battery provided in the vehicle by executing specific programs. The vehicle controller 30 may include a plurality of microcomputers instead of including one microcomputer.

The vehicle controller 30 limits the power taken out from the lithium ion battery 1 based on the available output power Pout output from the available output power calculation unit 8. For example, the vehicle controller 30 limits an upper limit of power consumption of the drive motor and the auxiliary equipment to the available output power Pout. The vehicle controller 30 displays various information on the meter 40.

As described above, when the power is taken out from the lithium ion battery 1, the cell voltage drops, but by limiting the taken out power to the available output power, the cell voltage can be maintained at the target lower limit cell voltage Vr, for example, 2.5 V. For example, as shown in FIG. 4, the cell voltage can be maintained at the target lower limit cell voltage Vr by limiting the power taking out from the lithium ion battery 1 to the available output power Pout1.

The meter 40 displays the various information based on the control from the vehicle controller 30. For example, the meter 40 displays the available output power Pout, an actual power consumption, and the like to a driver.

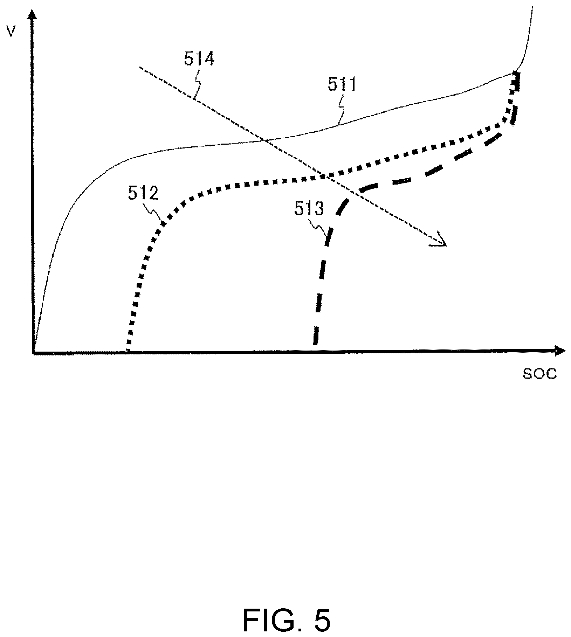

FIG. 5 is a diagram showing a rate characteristic of the lithium ion battery. A vertical axis indicates the cell voltage, and a horizontal axis indicates SOC. A solid curve 511 indicates an output characteristic at a high temperature of about 25 degrees, and dotted curves 512 and 513 indicate output characteristics at a low temperature of about -25 degrees. The dotted curve 513 indicates the output characteristic when a discharge current of the lithium ion battery is larger than that of the dotted curve 512. As indicated by an arrow 514, the output characteristic is lower at the low temperature than at room temperature. In particular, at the low temperature, as indicated by the dotted curves 512 and 513, when the discharge current is large, a discharge capacity, that is, an SOC width decreases, and the cell voltage drops sharply.

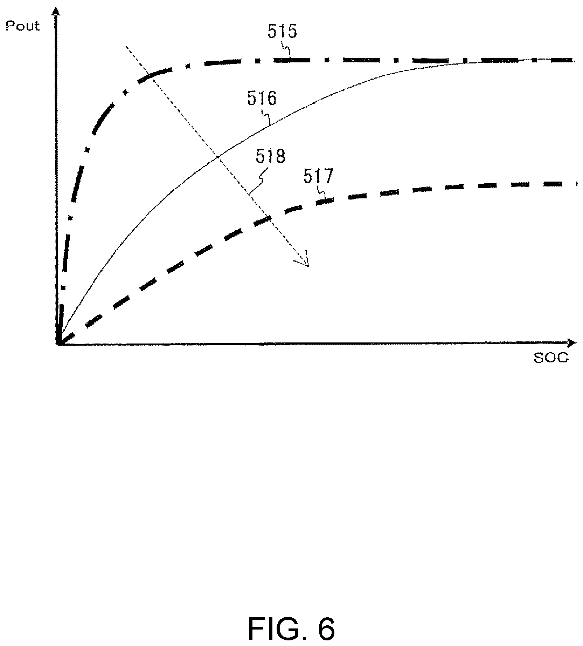

FIG. 6 is a diagram showing an output characteristic of the lithium ion battery. A vertical axis indicates the available output power, and a horizontal axis indicates the SOC. A dotted curve 515 indicates an output characteristic at a high temperature, a solid curve 516 indicates an output characteristic at room temperature, and a dotted curve 517 indicates an output characteristic at a low temperature. As shown in FIG. 6, the available output power is determined according to the temperature of the lithium ion battery and the SOC of the lithium ion battery. That is, as indicated by an arrow 518, the lower the temperature of the lithium ion battery, the higher the internal resistance value, the more significant the voltage drop according to the current flowing through the lithium ion battery, and the smaller the available output power. Further, the lower the SOC, the lower the voltage, and therefore the available output power becomes smaller.

Here, if the vehicle travels at a high speed when an outside air temperature is low and the battery temperature is low, the temperature rises on a center side of the battery pack due to high power that is taken out, and since an end plate side is close to outside air and easily cools, the temperature rises slowly, and there is a high possibility that a temperature difference will occur inside the battery pack. In this case, when the power is taken out according to a state of the cell whose temperature rises, a capacity characteristic and the voltage of the low temperature cell drop sharply. That is, the variation occurs in the charge and discharge characteristic between the high temperature cell and the low temperature cell. For example, as shown in FIGS. 5 and 6, since the rate characteristic of the low temperature cell is remarkable, the SOC and the cell voltage may drop sharply, and a travelable distance may decrease. That is, since an allowable discharge power in a low temperature state is small, exceeding an allowable power of the low temperature cell may result in over-discharge. Therefore, in order to prevent the over-discharge, it is conceivable to set the allowable power based on the battery temperature, but the position where the temperature sensor is arranged in the battery pack is limited by layout and cost, so that proper arrangement of the temperature sensors is often difficult.

Therefore, in the present embodiment, when the variation occurs in the charge and discharge characteristic among the cells, output is appropriately limited according to the variation to prevent the capacity and voltage of the cells from dropping. For example, in the first embodiment, when a variation indication amount that correlates with a magnitude of the variation in the charge and discharge characteristic among the cells constituting the lithium ion battery 1, that is, the above cell voltage difference, is equal to or larger than the determination reference value (voltage difference threshold value), the available output power Pout is switched from the basic available output power Pout1, which is normally set (when there is no variation) to the corrected available output power Pout2. More specifically, the cell voltage used for obtaining the available output power Pout is switched from the average cell voltage corresponding to the basic available output power Pout1 to the minimum cell voltage corresponding to the corrected available output power Pout2. Therefore, it is possible to prevent the capacity and voltage of the cells from dropping to lower limits. The power can be continuously taken out from the lithium ion battery 1, and traveling of the vehicle can be maintained.

[Operation Example of Battery Output Control System 100]

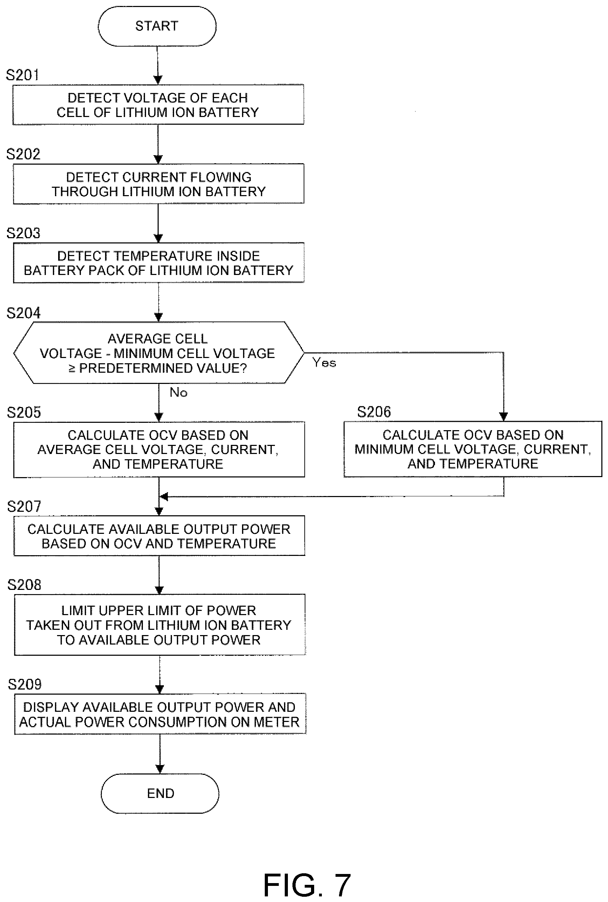

FIG. 7 is a flowchart showing an example of a processing procedure of output control process executed by the battery output control system 100. The processing procedure is executed based on a program stored in a storage unit (not shown) of the battery output control system 100.

In step S201, the cell voltage detection unit 2 detects each cell voltage of the lithium ion battery 1.

In step S202, the current detection unit 3 detects the current flowing through the lithium ion battery 1.

In step S203, the temperature detection unit 4 detects the temperature inside the battery pack of the lithium ion battery 1.

In step S204, the state determination unit 5 calculates the average cell voltage and the minimum cell voltage based on each cell voltage detected by the cell voltage detection unit 2, and determines whether the cell voltage difference, which is a difference between the average cell voltage and the minimum cell voltage, is equal to or larger than the voltage difference threshold value. Then, the switching unit 6 switches the cell voltage used in the OCV calculation as necessary based on the determination result. When the cell voltage difference is equal to or larger than the voltage difference threshold value, the switching unit 6 switches the cell voltage used in the OCV calculation to the minimum cell voltage, and proceeds to step S206. When the cell voltage difference is less than the voltage difference threshold value, the switching unit 6 sets the average cell voltage as the cell voltage used in the OCV calculation, and proceeds to step S205.

In step S205, the OCV calculation unit 7 calculates OCV per cell based on the average cell voltage set by the switching unit 6, the current detected by the current detection unit 3, and the temperature detected by the temperature detection unit 4.

In step S206, the OCV calculation unit 7 calculates OCV per cell based on the minimum cell voltage set by the switching unit 6, the current detected by the current detection unit 3, and the temperature detected by the temperature detection unit 4.

In step S207, the available output power calculation unit 8 calculates the available output power of the entire battery pack of the lithium ion battery 1 based on the OCV obtained by the OCV calculation unit 7 and the temperature detected by the temperature detection unit 4.

In step S208, the vehicle controller 30 limits the upper limit of the power taken out from the lithium ion battery 1 to the available output power obtained in step S207.

In step S209, the vehicle controller 30 causes the meter 40 to display the available output power obtained in step S207 and the actual power consumption of the lithium ion battery 1.

In the above, an example of switching the cell voltage used in the OCV calculation to the minimum cell voltage when the cell voltage difference (variation indication amount), which is the difference between the average cell voltage and the minimum cell voltage, is equal to or larger than the voltage difference threshold value is shown, but other criteria may be used. For example, the variation indication amount may be set as a difference between a maximum cell voltage and the minimum cell voltage, and whether the difference is equal to or larger than an appropriately determined determination reference value may be determined, and when the difference is equal to or larger than the determination reference value, the cell voltage used in the OCV calculation may be switched to the minimum cell voltage.

[Functions and Effects of First Embodiment]

The output control method for the lithium ion battery 1 (an example of a secondary battery) according to the first embodiment obtains the available output power Pout that can be output by the lithium ion battery 1 including the plurality of cells, and controls the output power of the lithium ion battery 1 based on the available output power Pout. The output control method includes an indication amount calculation step (step S204) of calculating the variation indication amount (cell voltage difference) that correlates with the magnitude of the variation between the charge and discharge characteristics of the plurality of cells, based on a charge and discharge characteristic indication amount (voltage or average cell voltage of each cell) that changes according to the change in the charge and discharge characteristic, a determination step (step S204) of determining that the variation occurs when the variation indication amount is equal to or larger than a predetermined determination reference value (voltage difference threshold value), and an available output power setting step (step S205 to step S207) of setting the available output power Pout based on the determination result that the variation occurs. Then, in the available output power setting step, when there is no variation, the basic available output power Pout1 determined based on the charge and discharge characteristic indication amount (particularly the average cell voltage) is set as the available output power Pout, and when the variation occurs, the corrected available output power Pout2 having a value lower than that of the basic available output power Pout 1 is set as the available output power Pout.

According to such an output control method, it is possible to appropriately limit the output according to the variation in the charge and discharge characteristic of each cell of the lithium ion battery 1, and it is possible to prevent a drop in the capacity and voltage of the cells.

In the output control method for the lithium ion battery 1 according to the first embodiment, in the indication amount calculation step (step S204), the voltage of each of the plurality of cells (each cell voltage detected by the cell voltage detection unit 2) is acquired as the charge and discharge characteristic indication amount, and the cell voltage difference, which is the difference between the average cell voltage and the minimum cell voltage of the cell voltages, is calculated as the variation indication amount. In the determination step (step S204), the predetermined voltage difference threshold value is set as the determination reference value. In the available output power setting step (step S205 to step S207), the basic available output power Pout1 is calculated based on the average cell voltage, and the corrected available output power Pout2 is calculated based on the minimum cell voltage.

According to such an output control method, it is possible to obtain an appropriate available output power according to the variation in the charge and discharge characteristic of each cell of the lithium ion battery 1.

The battery output control system 100 (an example of an output control system for a secondary battery) according to the present embodiment is an output control system that controls the output power of the lithium ion battery 1 including the plurality of cells. The battery output control system 100 includes the LBC 20 (an example of a controller) that acquires the charge and discharge characteristic indication amount (voltage of each cell) that changes according to the change in the charge and discharge characteristic of each of the plurality of cells, obtains the available output power Pout that can be output by the lithium ion battery 1 based on the acquired charge and discharge characteristic indication amount, and controls the output power of the lithium ion battery 1 based on the available output power Pout. The LBC 20 calculates the variation indication amount (cell voltage difference) that correlates with the magnitude of variation between the charge and discharge characteristics of the cells based on the charge and discharge characteristic indication amount, and determines that the variation occurs when the variation indication amount is equal to or larger than the predetermined determination reference value (voltage difference threshold value). When there is no variation, the LBC 20 sets the basic available output power Pout1 determined based on the charge and discharge characteristic indication amount as the available output power Pout, and when the variation occurs, sets the corrected available output power Pout2 having a value lower than that of the basic available output power Pout1 as the available output power.

According to such a battery output control system 100, it is possible to appropriately limit the output according to the variation in the charge and discharge characteristic of each cell of the lithium ion battery 1, and it is possible to prevent a drop in the capacity and voltage of the cells.

[Second Embodiment]

The second embodiment shows an example in which an average OCV calculation unit 51 and a minimum OCV calculation unit 52 are provided in place of the OCV calculation unit 7 in the battery output control system 100 shown in the first embodiment. The second embodiment is an example in which a part of the first embodiment is modified, and the same reference numerals are given to the parts common to the first embodiment, and a part of description thereof will be omitted.

[Configuration Example of Battery Output Control System]

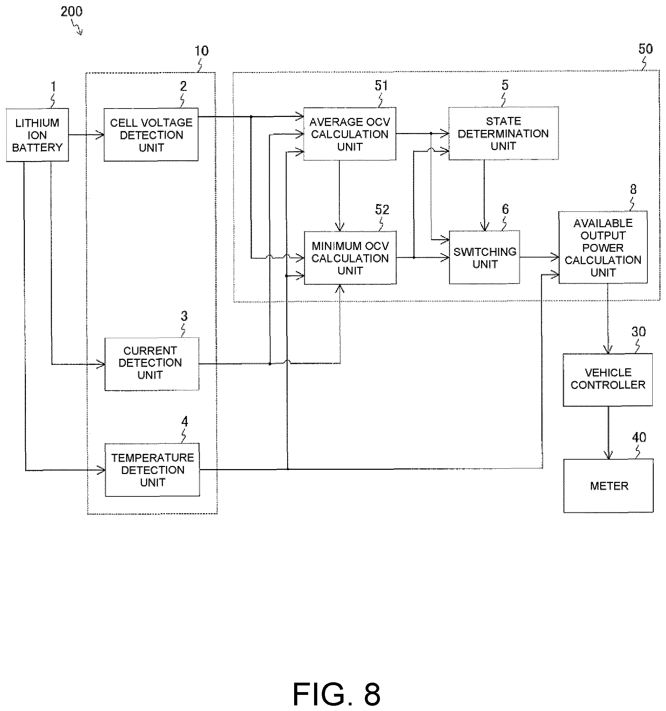

FIG. 8 is a block diagram showing a functional configuration example of a battery output control system 200 according to the second embodiment. In the battery output control system 200, the average OCV calculation unit 51 and the minimum OCV calculation unit 52 are provided in an LBC 50.

The average OCV calculation unit 51 calculates an average OCV corresponding to an average value in the OCV of each cell based on an average value of the cell voltages detected by the cell voltage detection unit 2, the current detected by the current detection unit 3, and the temperature detected by the temperature detection unit 4. Specifically, the value of OCV obtained by using the average cell voltage value in the CCV of the above Equation 1 is obtained as the average OCV.

The minimum OCV calculation unit 52 calculates a minimum OCV corresponding to a minimum value in the OCV of each cell constituting the lithium ion battery 1 based on a minimum value of the cell voltages detected by the cell voltage detection unit 2, the current detected by the current detection unit 3, and the temperature detected by the temperature detection unit 4. Specifically, the minimum OCV is obtained according to the above Equation 1 using the minimum cell voltage in the CCV of Equation 1. As described above, in the second embodiment, the average OCV calculation unit 51 uses the average voltage value of all the cell voltages detected by the cell voltage detection unit 2, whereas the minimum OCV calculation unit 52 merely uses the minimum value of the cell voltages detected by the cell voltage detection unit 2. The average OCV calculation unit 51 and the minimum OCV calculation unit 52 also function as the internal resistance calculation unit that calculates the internal resistance of the lithium ion battery 1 based on the temperature detected by the temperature detection unit 4. In the second embodiment, the OCV is the charge and discharge characteristic indication amount that changes according to the change in the charge and discharge characteristic of each cell.

The state determination unit 5 determines a difference in the charge and discharge characteristic of each cell constituting the lithium ion battery 1 based on the average OCV output from the average OCV calculation unit 51 and the minimum OCV output from the minimum OCV calculation unit 52. Specifically, the state determination unit 5 calculates an OCV difference, which is a difference between the average OCV and the minimum OCV. Then, the state determination unit 5 determines whether the OCV difference has a deviation of an OCV difference threshold value as a predetermined determination reference value or more.

Here, the OCV difference threshold value used in the determination process by the state determination unit 5 is set to a suitable value from the viewpoint of determining that a predetermined variation occurs in the charge and discharge characteristic (charge and discharge performance) of each cell constituting the lithium ion battery 1, as the voltage difference threshold value described in the first embodiment. For example, the OCV difference threshold value can be set to a value at which the OCV difference is about 15%. These values can be set using various experimental data.

The switching unit 6 switches the OCV used in the available output power calculation based on the determination result of the state difference output from the state determination unit 5, and outputs a switching result to the available output power calculation unit 8. Specifically, when the OCV difference is less than the OCV difference threshold value, the switching unit 6 sets the OCV used in the available output power calculation to the average OCV. When the OCV difference is equal to or larger than the OCV difference threshold value, the switching unit 6 sets the OCV used in the available output power calculation to the minimum OCV.

The available output power calculation unit 8 calculates the available output power of the entire battery pack of the lithium ion battery 1 based on the OCV (the average OCV or the minimum OCV) output from the switching unit 6 and the temperature output from the temperature detection unit 4. A method for calculating the available output power is the same as that of the first embodiment.

[Operation Example of Battery Output Control System]

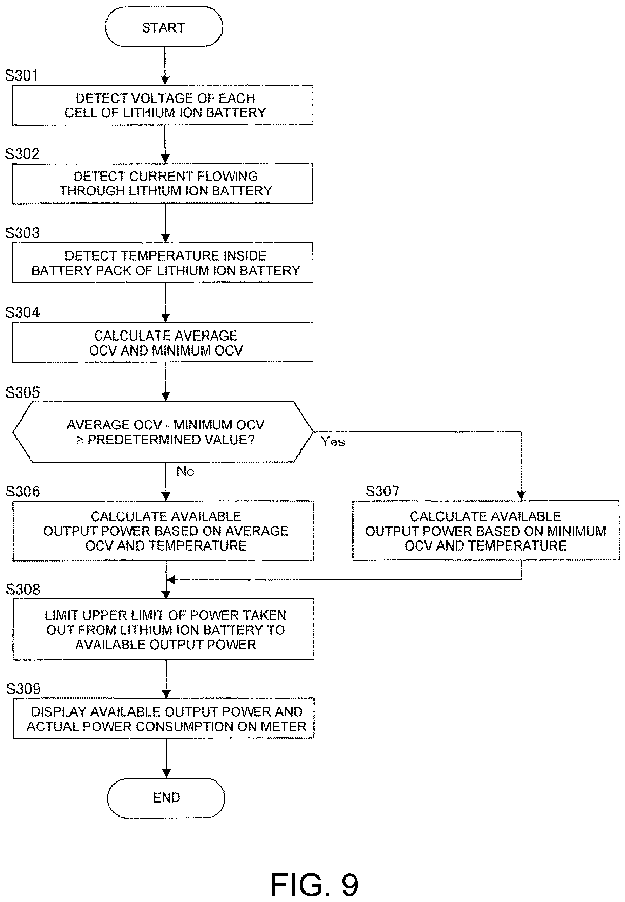

FIG. 9 is a flowchart showing an example of a processing procedure of output control process executed by the battery output control system 200. The processing procedure is executed based on a program stored in a storage unit (not shown) of the battery output control system 200. The process shown in FIG. 9 is an example in which a part of the process shown in FIG. 7 is modified, and steps S301 to S303, S308, and S309 shown in FIG. 9 are common with steps S201 to S203, S208, and S209 shown in FIG. 7. Therefore, in the following, a part of description about the parts common with the process shown in FIG. 7 will be omitted.

In step S304, the average OCV calculation unit 51 calculates the average OCV of each cell based on the average value of the cell voltages detected by the cell voltage detection unit 2, the current detected by the current detection unit 3, and the temperature detected by the temperature detection unit 4. The minimum OCV calculation unit 52 calculates the minimum OCV of each cell based on the minimum value of the cell voltages detected by the cell voltage detection unit 2, the current detected by the current detection unit 3, and the temperature detected by the temperature detection unit 4.

In step S305, the state determination unit 5 determines whether the OCV difference, which is the difference between the average OCV and the minimum OCV obtained in step S304, is equal to or larger than the OCV difference threshold value. Then, the switching unit 6 switches the OCV used in the available output power calculation as needed, based on the determination result. When the OCV difference is equal to or larger than the OCV difference threshold value, the switching unit 6 switches the OCV used in the available output power calculation to the minimum OCV, and proceeds to step S307. When the OCV difference is less than the OCV difference threshold value, the switching unit 6 sets the average OCV as the OCV used in the available output power calculation, and proceeds to step S306.

In step S306, the available output power calculation unit 8 calculates the available output power of the entire battery pack of the lithium ion battery 1 based on the average OCV set by the switching unit 6 and the temperature output from the temperature detection unit 4.

In step S307, the available output power calculation unit 8 calculates the available output power of the entire battery pack of the lithium ion battery 1 based on the minimum OCV set by the switching unit 6 and the temperature output from the temperature detection unit 4.

The second embodiment shows an example in which when the OCV difference (variation indication amount), which is the difference between the average OCV and the minimum OCV, is equal to or larger than the OCV difference threshold value (determination reference value), the OCV used in the available output power calculation is switched to the minimum OCV, but other criteria may be used in combination. For example, when the determination results of the determination process of determining whether the OCV difference is equal to or larger than the OCV difference threshold value, and the determination process described in the first embodiment of determining whether the cell voltage difference is equal to or larger than the voltage difference threshold value (determination reference value), or the determination process of determining whether the difference between the maximum cell voltage and the minimum cell voltage is equal to or larger than the determination reference value, are both positive, the OCV used in the available output power calculation may be switched to the minimum OCV.

[Functions and Effects of Second Embodiment]

The output control method for the lithium ion battery 1 (an example of the secondary battery) according to the second embodiment acquires the OCV of each of the plurality of cells as the charge and discharge characteristic indication amount (the average OCV calculated by the average OCV calculation unit 51 and the minimum OCV calculated by the minimum OCV calculation unit 52), and calculates the OCV difference, which is the difference between the average OCV and the minimum OCV in the plurality of cells, as the variation indication amount in an indication amount calculation step (step S305). In a determination step (step S305), a predetermined OCV difference threshold value is set as the above determination reference value. In an available output power setting step (steps S306 and S307), the basic available output power Pout1 is calculated based on the average OCV, and the corrected available output power Pout2 is calculated based on the minimum OCV.

According to such an output control method, it is possible to obtain an appropriate available output power according to the variation in the charge and discharge characteristic of each cell of the lithium ion battery 1.

[Third Embodiment]

The third embodiment shows an example in which the average OCV calculation unit 51, the minimum OCV calculation unit 52, and the available output power calculation unit 8 in the battery output control system 200 shown in the second embodiment are replaced with an average SOC calculation unit 61, a minimum SOC calculation unit 62, and a calculation unit 70, and a temperature correction unit 63 and a power limit following performance setting unit 64 are added. The third embodiment is an example in which parts of the first embodiment and the second embodiment are modified, and the same reference numerals are given to the parts common to the first embodiment and the second embodiment, and a part of description thereof will be omitted.

[Configuration Example of Battery Output Control System]

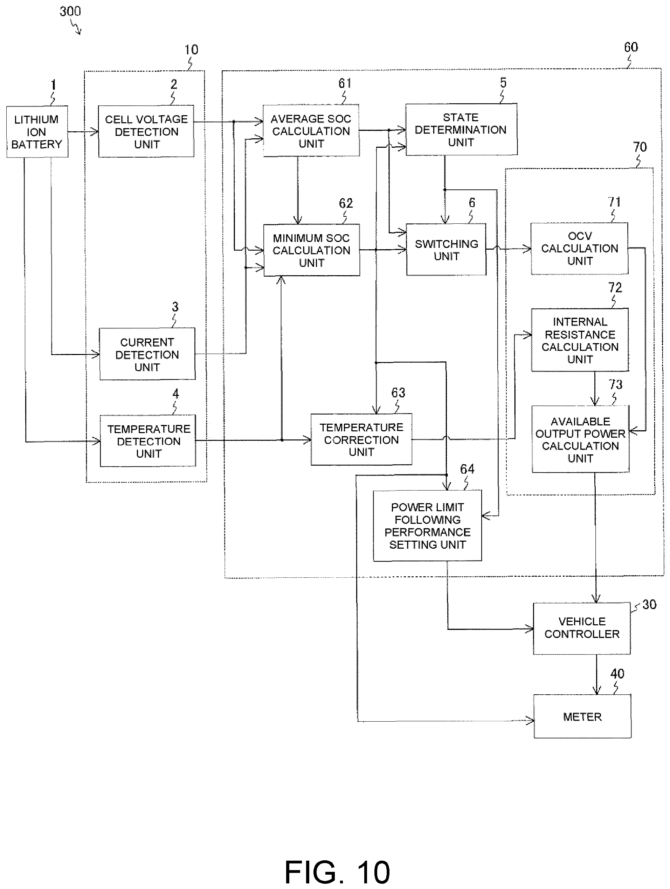

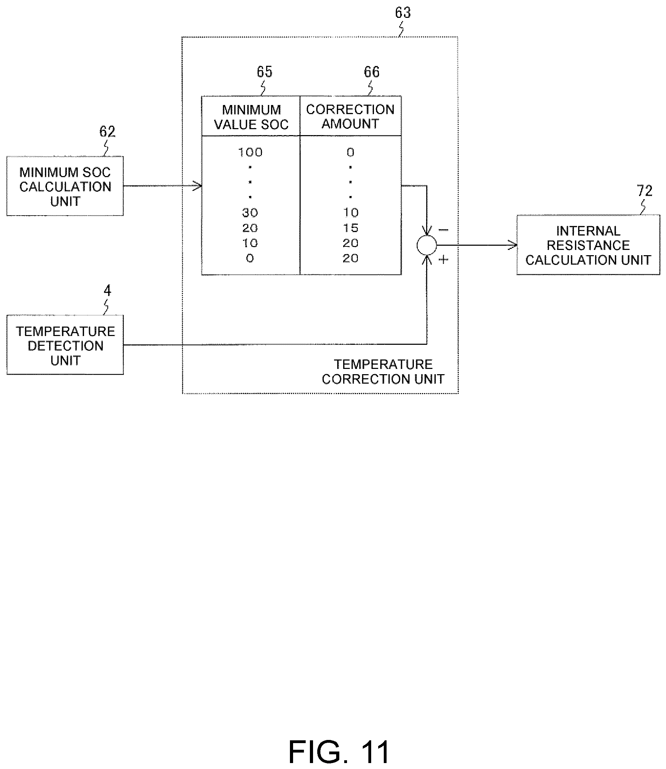

FIG. 10 is a block diagram showing a functional configuration example of a battery output control system 300 according to the third embodiment. In the battery output control system 300, the average SOC calculation unit 61, the minimum SOC calculation unit 62, the temperature correction unit 63, the power limit following performance setting unit 64, and the calculation unit 70 are included in an LBC 60. The calculation unit 70 includes an OCV calculation unit 71, an internal resistance calculation unit 72, and an available output power calculation unit 73. Each configuration of the battery output control system 300 will be described with reference to FIGS. 11 to 15 as appropriate.

FIG. 11 is a diagram schematically showing a temperature correction method by the temperature correction unit 63.

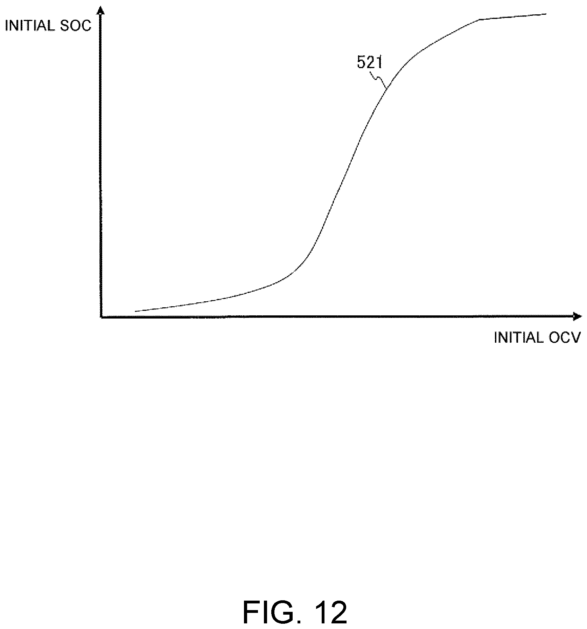

FIG. 12 is a diagram showing an example of a calculation method of calculating an initial SOC from an initial OCV. The initial OCV is an open end voltage of the lithium ion battery 1 obtained based on a cell voltage of the vehicle during start-up. The initial SOC is a value obtained according to the initial OCV as indicated by a curve 521.

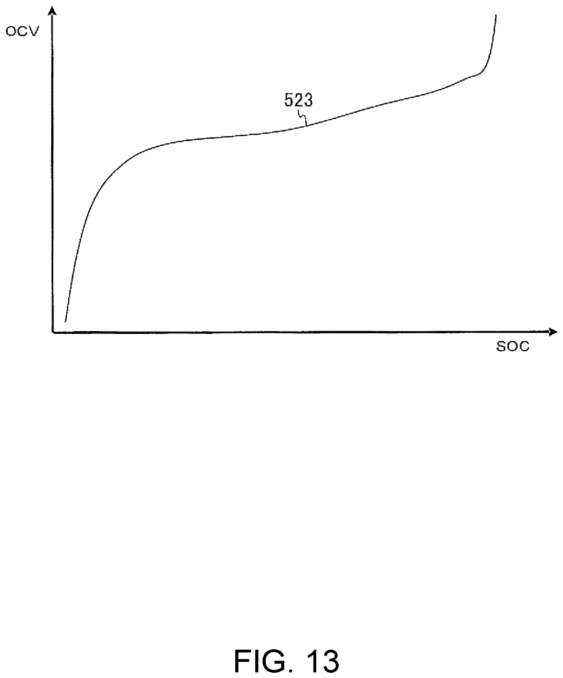

FIG. 13 is a diagram showing an example of an OCV calculation method by the OCV calculation unit 71.

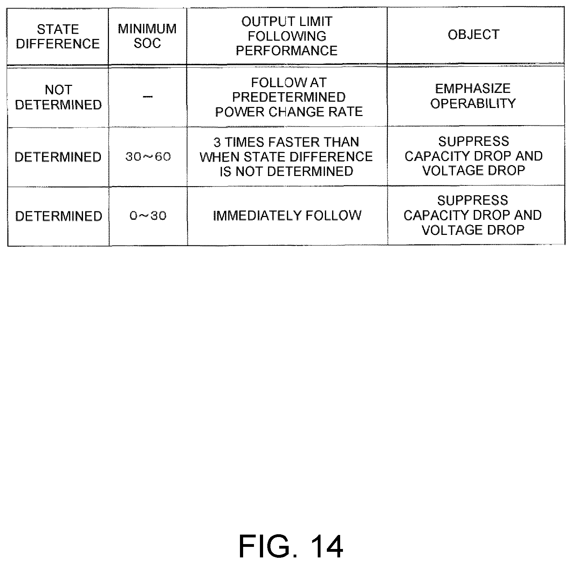

FIG. 14 is a diagram showing an example of setting power limit following performance by the power limit following performance setting unit 64.

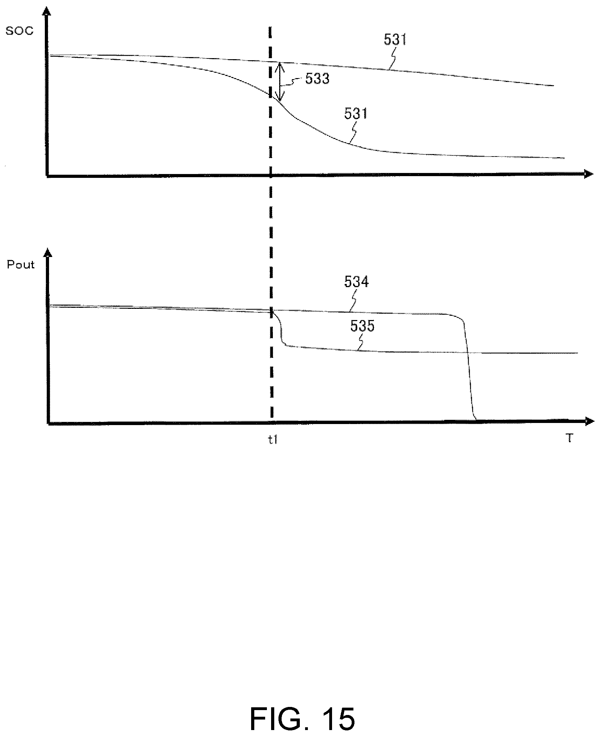

FIG. 15 is a time chart showing movement of SOC and available output power Pout. A vertical axis of an upper graph indicates the SOC, and a vertical axis of a lower graph indicates the available output power Pout. Horizontal axes of both graphs are time axes. A curve 531 indicates an average SOC, and a curve 532 indicates a minimum SOC. The minimum SOC corresponding to the curve 532 is displayed on the meter 40. A curve 534 indicates the available output power Pout obtained by using the average SOC, and a curve 535 indicates the available output power Pout obtained by using the minimum SOC. A time t1 indicates a timing at which a deviation of a predetermined value or more occurs between the average SOC and the minimum SOC, as indicated by an arrow 533.

The average SOC calculation unit 61 calculates an average SOC corresponding to an average value in the SOC of each cell based on the cell voltage detected by the cell voltage detection unit 2, the current detected by the current detection unit 3, and the temperature detected by the temperature detection unit 4. Specifically, the average SOC calculation unit 61 detects an open end voltage (the initial OCV) of the lithium ion battery 1 based on the cell voltage of the vehicle during start-up by using the correlation shown in FIG. 2. Next, the average SOC calculation unit 61 obtains the initial SOC corresponding to the initial OCV, as indicated by the curve 521 of FIG. 12. Then, the average SOC calculation unit 61 calculates the average SOC by subtracting the current flowing from the lithium ion battery 1 from the initial SOC based on the current detected by the current detection unit 3. Here, an example of calculating the average SOC by subtracting an integrated value of the current from the initial SOC is shown, but the average SOC may also be calculated by using an average value of the cell voltages detected by the cell voltage detection unit 2, same as a calculation process of the minimum SOC shown below.

The minimum SOC calculation unit 62 calculates a minimum OCV corresponding to a minimum value in the SOC of each cell constituting the lithium ion battery 1 based on a minimum value of the cell voltages detected by the cell voltage detection unit 2, the current detected by the current detection unit 3, and the temperature detected by the temperature detection unit 4. Specifically, the minimum OCV is obtained according to Equation 1 by applying the minimum cell voltage to the CCV of the above Equation 1. As indicated by a curve 523 in FIG. 13, the minimum SOC corresponding to the minimum OCV is obtained. As described above, in the third embodiment, the average SOC calculation unit 61 uses the average value of the cell voltages detected by the cell voltage detection unit 2, whereas the minimum SOC calculation unit 62 merely uses the minimum value of the cell voltages detected by the cell voltage detection unit 2. The average SOC calculation unit 61 and the minimum SOC calculation unit 62 also function as the internal resistance calculation unit that calculates the internal resistance of the lithium ion battery 1 based on the temperature detected by the temperature detection unit 4. In the third embodiment, the SOC is the charge and discharge characteristic indication amount that changes according to the change in the charge and discharge characteristic of each cell.

The state determination unit 5 determines a difference in the charge and discharge characteristic of each cell constituting the lithium ion battery 1 based on the average SOC output from the average SOC calculation unit 61 and the minimum SOC output from the minimum SOC calculation unit 62. Specifically, the state determination unit 5 calculates an SOC difference, which is a difference between the average SOC and the minimum SOC. Then, the state determination unit 5 determines whether the SOC difference has a deviation of an SOC difference threshold value as a predetermined determination reference value or more.

Here, the SOC difference threshold value used in the determination process by the state determination unit 5 is set to a suitable value from the viewpoint of determining that a predetermined variation occurs in the charge and discharge characteristic of each cell constituting the lithium ion battery 1, as the OCV difference threshold value described in the second embodiment. For example, the SOC difference threshold value can be set to a value at which the SOC difference is about 15%. These values can be set using various experimental data.

The switching unit 6 switches the SOC used in the OCV calculation based on a determination result of the state difference output from the state determination unit 5, and outputs a switching result to the OCV calculation unit 71. Specifically, when the SOC difference is less than the SOC difference threshold value, the switching unit 6 sets the SOC used in the OCV calculation to the average SOC. When the SOC difference is equal to or larger than the SOC difference threshold value, the switching unit 6 sets the SOC used in the OCV calculation to the minimum SOC.

The temperature correction unit 63 corrects the temperature output from the temperature detection unit 4 based on the minimum SOC output from the minimum SOC calculation unit 62, and outputs the corrected temperature to the internal resistance calculation unit 72. Specifically, as shown in FIG. 11, the temperature correction unit 63 extracts a value corresponding to the minimum SOC output from the minimum SOC calculation unit 62 from a minimum value SOC 65, and subtracts a value of a correction amount 66 corresponding to the extracted value from the temperature output from the temperature detection unit 4. For example, when the minimum SOC output from the minimum SOC calculation unit 62 is a value in a range of 21 to 30, 10 is used as the correction amount 66.

In this way, a deviation between a detected value of the temperature in the battery pack of the lithium ion battery 1 and a minimum value of the actual temperature is investigated in advance, and the detected value is corrected to the lower side. As a result, it is possible to predict the actual minimum temperature and improve calculation accuracy of the available output power, and it is possible to complete available output power calculation with a small number of temperature sensors.

As shown in FIG. 11, the lower the minimum value SOC 65, the larger the correction amount 66 is set, so that the output is strongly limited, and the capacity drop and voltage drop can be alleviated. As a result, the lithium ion battery 1 can continuously output power, and can maintain traveling of a vehicle system. Although an example of performing temperature correction based on the minimum SOC is shown here, the temperature correction may also be performed based on the average SOC. In this case, it is preferable to set the correction amount 66 larger than that when the minimum SOC is used.

The OCV calculation unit 71 calculates the OCV per cell based on the SOC (average SOC or minimum SOC) output from the switching unit 6, and outputs a calculation result, that is, the OCV, to the available output power calculation unit 73. Specifically, as indicated by the curve 523 in FIG. 13, the OCV calculation unit 71 obtains an OCV corresponding to the SOC output from the switching unit 6.

The internal resistance calculation unit 72 calculates the internal resistance of the lithium ion battery 1 based on the temperature output from the temperature correction unit 63, and outputs a calculation result, that is, a value of the internal resistance, to the available output power calculation unit 73. A method for calculating the internal resistance is the same as that of the first embodiment. The internal resistance calculation unit shown in the first embodiment and the second embodiment may also calculate the internal resistance of the lithium ion battery 1 using the corrected temperature.

The available output power calculation unit 73 calculates the available output power of the entire battery pack of the lithium ion battery 1 based on the OCV output from the OCV calculation unit 71 and the value of the internal resistance output from the internal resistance calculation unit 72. A method for calculating the available output power is the same as that of the first embodiment.

The power limit following performance setting unit 64 sets the power limit following performance based on the determination result of the state difference output from the state determination unit 5 and the minimum SOC output from the minimum SOC calculation unit 62, and outputs setting information to the vehicle controller 30. That is, the power limit following performance setting unit 64 switches an output power status indicating how to follow the available output power obtained by the available output power calculation unit 73. In other words, the power limit following performance setting unit 64 sets a degree of following performance that causes the actual power of the lithium ion battery 1 consumed by the drive motor and the like of the vehicle system to follow the available output power.

For example, as shown in FIG. 14, when the state difference is not determined by the state determination unit 5, it is set to follow the available output power at a predetermined power change rate. That is, normally, a power change amount is determined according to a vehicle speed in consideration of operability of a driver. By setting the following performance to be slow in this way, the output limit of the lithium ion battery 1 is alleviated, and the operability of the driver can be emphasized.

On the other hand, when the state difference is determined by the state determination unit 5, the following performance of the power limit of the available output power is set to be fast. That is, the following performance that limits the available output power obtained by the calculation unit 70 is set to be fast. For example, when the minimum SOC is 30% to 60%, the following performance of the power limit of the available output power is set to be about 3 times faster than when the state difference is not determined. When the minimum SOC is 0 to 30%, the following performance is set to immediately follow the available output power. In this way, when the state difference is determined, the degree of following performance is set to cause the actual power to follow the available output power faster than before the state difference is determined. That is, the output power status is switched and the following performance of the power limit is set to be fast. When the minimum SOC becomes low, it is possible to suppress the capacity drop and voltage drop of the lithium ion battery 1 by causing the actual power to immediately follow the available output power.

The vehicle controller 30 limits the power taken out from the lithium ion battery 1 to the available output power output from the calculation unit 70. During this limitation, as described above, the vehicle controller 30 adjusts a speed limit of power extraction according to the following performance set by the power limit following performance setting unit 64. That is, the vehicle controller 30 limits the available output power by a power limit change rate according to the power limit following performance set by the power limit following performance setting unit 64. As described above, the vehicle controller 30 functions as a power limit unit that limits the output power of the lithium ion battery 1 based on the degree of following performance set by the power limit following performance setting unit 64.

The meter 40 displays the minimum SOC output from the minimum SOC calculation unit 62 to the driver together with the available output power, the actual power consumption, and the like. By displaying the minimum SOC on the meter 40 in this way, the driver can quickly recognize a drop in SOC. As a result, after the driver recognizes the drop in SOC, the available output power is limited, so that there is no sudden feeling or discomfort feeling.

In this way, in the third embodiment, when the variation indication amount, that is, the SOC difference is equal to or larger than the determination reference value (SOC difference threshold value), the SOC used for obtaining the available output power Pout is switched from the average SOC, which corresponds to the basic available output power, to the minimum SOC, which corresponds to the corrected available output power. In this way, by using the minimum SOC, the available output power Pout drops fast, and a sudden drop in the cell voltage can be suppressed.

For example, as indicated by the curve 534 in FIG. 15, when the available output power Pout is obtained using the average SOC, the available output power Pout becomes a high value, so that the minimum cell voltage may drop at high output and the available output power Pout may be suddenly decreased.

In this regard, in the third embodiment, when the SOC difference is equal to or larger than the SOC difference threshold value, the output is limited to the available output power Pout obtained by using the minimum SOC indicated by the curve 535 in FIG. 15. Therefore, it is possible to suppress a sudden drop in the cell voltage.

[Operation Example of Battery Output Control System]

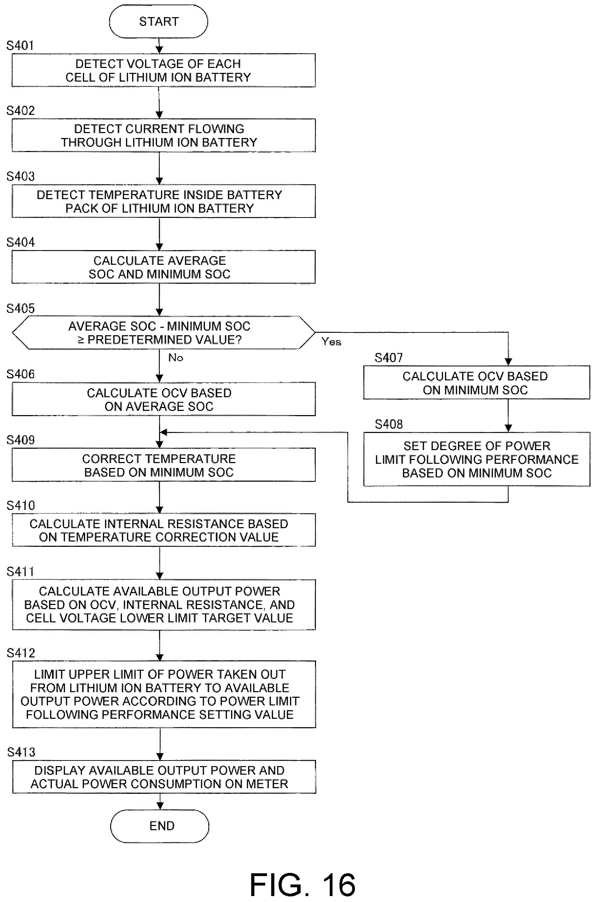

FIG. 16 is a flowchart showing an example of a processing procedure of output control process executed by the battery output control system 300. The processing procedure is executed based on a program stored in a storage unit (not shown) of the battery output control system 300. The process shown in FIG. 16 is an example in which a part of the process shown in FIG. 7 is modified, and steps S401 to S403 shown in FIG. 9 are common with steps S201 to S203 shown in FIG. 7.

Therefore, in the following, a part of description about the parts common with the process shown in FIG. 7 will be omitted.

In step S404, the average SOC calculation unit 61 calculates the average SOC per cell based on the cell voltages detected by the cell voltage detection unit 2 and the current detected by the current detection unit 3. The minimum SOC calculation unit 62 calculates the minimum SOC of each cell based on the minimum value of the cell voltages detected by the cell voltage detection unit 2, the current detected by the current detection unit 3, and the temperature detected by the temperature detection unit 4.

In step S405, the state determination unit 5 determines whether the SOC difference, which is the difference between the average SOC and the minimum SOC obtained in step S404, is equal to or larger than the SOC difference threshold value. Then, the switching unit 6 switches the SOC used in the OCV calculation as necessary based on the determination result. When the SOC difference is equal to or larger than the SOC difference threshold value, the switching unit 6 switches the SOC used in the OCV calculation to the minimum SOC, and proceeds to step S407. When the SOC difference is less than the SOC difference threshold value, the switching unit 6 sets the average SOC as the SOC used in the OCV calculation, and proceeds to step S406.

In step S406, the OCV calculation unit 71 calculates the OCV per cell based on the average SOC set by the switching unit 6.

In step S407, the OCV calculation unit 71 calculates the OCV per cell based on the minimum SOC set by the switching unit 6.

In step S408, the power limit following performance setting unit 64 sets the degree of following performance that causes the actual power of the lithium ion battery 1 to follow the available output power based on the minimum SOC set by the switching unit 6.

In step S409, the temperature correction unit 63 corrects the temperature detected by the temperature detection unit 4 based on the minimum SOC set by the switching unit 6.

In step S410, the internal resistance calculation unit 72 calculates the internal resistance of the lithium ion battery 1 based on a temperature correction value corrected by the temperature correction unit 63.

In step S411, the available output power calculation unit 73 calculates the available output power of the entire battery pack of the lithium ion battery 1 based on the OCV obtained by the OCV calculation unit 71, the internal resistance obtained by the internal resistance calculation unit 72, and a cell voltage lower limit target value.

In step S412, the vehicle controller 30 limits an upper limit of the power taken out from the lithium ion battery 1 to the available output power according to the degree of power limit following performance set by the power limit following performance setting unit 64.

In step S413, the meter 40 displays the minimum SOC obtained by the minimum SOC calculation unit 62, the available output power obtained by the available output power calculation unit 73, and the actual power consumption of the lithium ion battery 1.

In the third embodiment, an example is shown in which the SOC used in the available output power calculation is switched to the minimum SOC when the SOC difference (variation indication amount), which is the difference between the average SOC and the minimum SOC, is equal to or larger than the SOC difference threshold value, but other criteria may be used in combination. For example, when the determination results of the determination process of determining whether the SOC difference is equal to or larger than the SOC difference threshold value, and the determination process described in the first embodiment of determining whether the cell voltage difference is equal to or larger than the voltage difference threshold value (determination reference value), or the determination process of determining whether the difference between the maximum cell voltage and the minimum cell voltage is equal to or larger than the determination reference value, are both positive, the SOC used in the available output power calculation may be switched to the minimum SOC.

[Functions and Effects of Third Embodiment]

The output control method for the lithium ion battery 1 (an example of the secondary battery) according to the third embodiment acquires the SOC of each of the plurality of cells as the charge and discharge characteristic indication amount (the average SOC calculated by the average SOC calculation unit 61 and the minimum SOC calculated by the minimum SOC calculation unit 62), and calculates the SOC difference, which is the difference between the average SOC and the minimum SOC in the plurality of cells, as the variation indication amount in the indication amount calculation step (step S405). In the determination step (step S405), a predetermined SOC difference threshold value is set as the above determination reference value. In the available output power setting step (step S406 to step S411), the basic available output power Pout1 is calculated based on the average SOC, and the corrected available output power Pout2 is calculated based on the minimum SOC.

According to such an output control method, it is possible to appropriately limit the output according to the variation in the charge and discharge characteristic of each cell of the lithium ion battery 1, and it is possible to prevent the drop in the capacity and voltage of the cells.

The output control method for the lithium ion battery 1 according to the third embodiment further includes a temperature detection step (step S403) of detecting the temperature in the lithium ion battery 1, a temperature correction step (step S409) of correcting the detected temperature based on the charge and discharge characteristic indication amount (SOC), and a step (step S411) of obtaining the available output power Pout using the corrected temperature. In the available output power setting step (steps S406 to S411), the corrected available output power Pout2 is obtained using the corrected temperature.

According to such an output control method, it is possible to improve the calculation accuracy of the available output power, and it is possible to complete the available output power calculation with a small number of temperature sensors.

In the output control method for the lithium ion battery 1 according to the third embodiment, in the temperature correction step (step S409), the detected temperature is corrected based on the minimum SOC of the SOC of each of the plurality of cells as the charge and discharge characteristic indication amount.

According to such an output control method, it is possible to improve the calculation accuracy of the available output power, and it is possible to complete the available output power calculation with a small number of temperature sensors.

The output control method for the lithium ion battery 1 according to the third embodiment further includes a following performance setting step (step S408) of setting the degree of following performance that causes the actual power of the lithium ion battery 1 to follow the available output power Pout. In the following performance setting step, when a variation occurs, the degree of following performance is set to cause the actual power to follow the available output power faster than before the variation occurs. In the output control method, the output power of the lithium ion battery 1 is controlled to be limited based on the set degree of following performance.

According to such an output control method, it is possible to suppress the capacity decrease and the voltage decrease of the lithium ion battery 1.


[Fourth Embodiment]

The fourth embodiment shows an example in which the state determination unit 5 performs the state difference determination using the temperature detected by the temperature detection unit 4 in the battery output control system 300 shown in the third embodiment. The fourth embodiment is an example in which a part of the third embodiment is modified, and the same reference numerals are given to the parts common to the third embodiment, and a part of description thereof will be omitted.


[Configuration Example of Battery Output Control System]

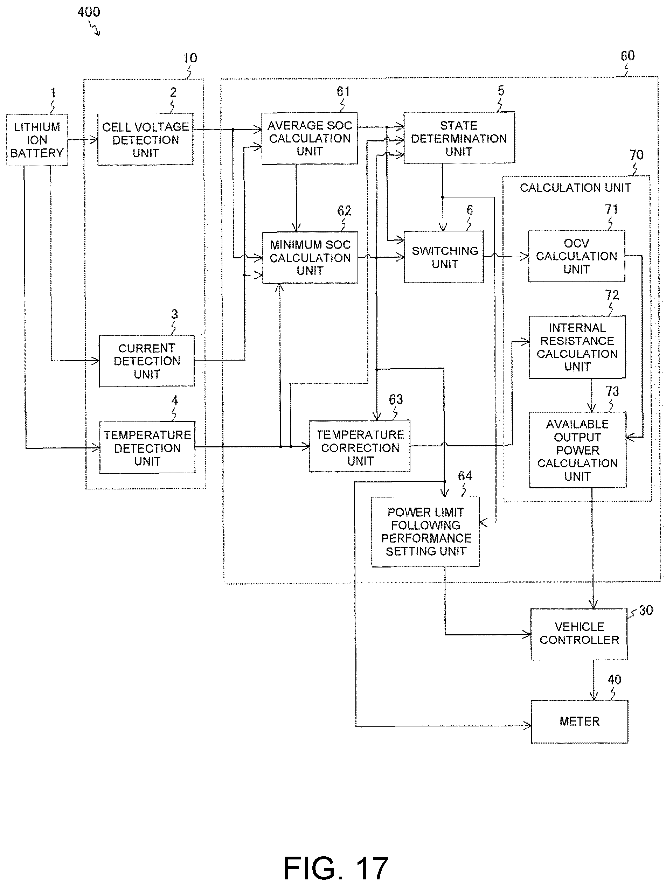

FIG. 17 is a block diagram showing a functional configuration example of a battery output control system 400 according to the fourth embodiment. The battery output control system 400 has substantially the same configuration as that shown in FIG. 10. However, there is a difference that the value of the temperature detected by the temperature detection unit 4 is output to the state determination unit 5.

The state determination unit 5 determines whether to determine the state difference (difference in the charge and discharge characteristic of each cell) of the lithium ion battery 1 based on the temperature detected by the temperature detection unit 4. For example, the state determination unit 5 determines whether to determine the state difference of the lithium ion battery 1 when a start-up state of the vehicle is continued (during one trip) based on the temperature detected by the temperature detection unit 4 during the start-up. For example, when the temperature detected by the temperature detection unit 4 during the start-up of the vehicle is equal to or lower than a predetermined temperature, for example, 0°C or lower, the state determination unit 5 determines that the state difference of the lithium ion battery 1 is continuously determined. On the other hand, the state determination unit 5 determines that the state difference of the lithium ion battery 1 is not determined when the temperature detected by the temperature detection unit 4 during the start-up of the vehicle exceeds the predetermined temperature. In this case, the determination in step S405 of FIG. 16 always proceeds to step S406. The other configurations are the same as those in the third embodiment.

Here, the temperature and voltage of each cell of the lithium ion battery 1 often vary in the process of the temperature increasing from a low temperature. Therefore, by performing the determination by the state determination unit 5 only when the temperature of the lithium ion battery 1 is low, the output limit due to variation is not applied at room temperature, so that it is possible to calculate the available output power without sacrificing power performance of the vehicle at room temperature. By limiting the output limit due to variation to a low temperature, it is possible to prevent a malfunction at room temperature.


[Functions and Effects of Fourth Embodiment]

The output control method for the lithium ion battery 1 according to the fourth embodiment further includes a temperature detection step (step 403) of detecting the temperature in the lithium ion battery 1. In the determination step (step S405), when the detected temperature is equal to or less than a predetermined value, it is determined whether a variation occurs.

According to such an output control method, it is possible to complete the calculation of the available output power without sacrificing the power performance of the vehicle at room temperature, and it is possible to prevent the malfunction at room temperature.

[Fifth Embodiment]

In the third embodiment and the fourth embodiment, an example in which the calculation unit 70 calculates the available output power based on the SOC and the temperature is shown. However, a map indicating correlation among the SOC, the temperature, and the available output power may be stored, and the available output power may be obtained using the map. Therefore, in the fifth embodiment, an example of obtaining the available output power by using the map indicating correlation among the SOC and the temperature, and the available output power is shown.

[Example of Available Output Power Calculation Map]

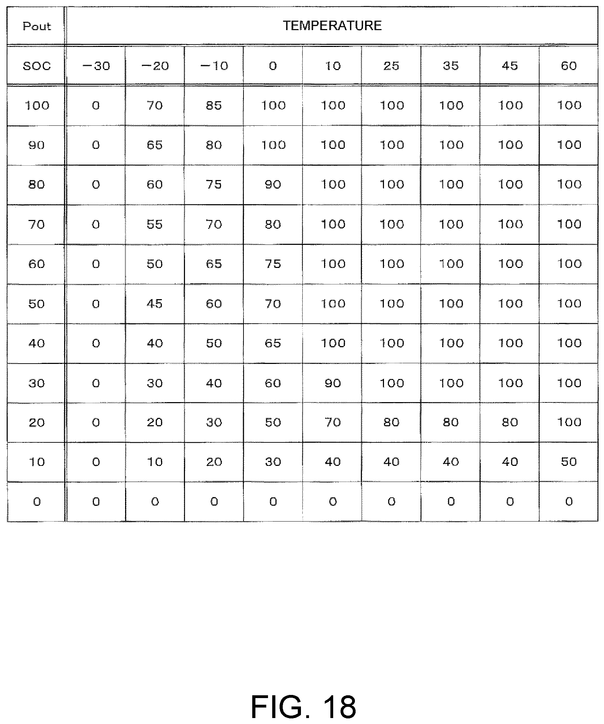

FIG. 18 is a diagram showing an example of an available output power calculation map, which indicates correlation among SOC, temperature, and available output power. The available output power calculation map can be created by testing the correlation among the SOC, the temperature, and the available output power offline and calculating in advance. For example, the available output power calculation map can be created by testing an output characteristic of the lithium ion battery as shown in FIG. 6.

The battery output control system according to the fifth embodiment stores the available output power calculation map shown in FIG. 18 in a storage unit (not shown), and can obtain the available output power corresponding to the SOC and the temperature by referring to the available output power calculation map. For example, when the SOC is 20% and the temperature is 10°C, the available output power is obtained as 77 kw. For example, when the SOC is 60% and the temperature is 0°C, the available output power is obtained as 75 kw.

It should be noted that each process shown in the first embodiment to the fifth embodiment can be appropriately combined and performed in a possible extent.

The first embodiment to the fifth embodiment show an example in which the state determination unit 5 calculates the variation indication amount (cell voltage difference, SOC difference, OCV difference) based on the charge and discharge characteristic indication amount (cell voltage, SOC, OCV), and determines that a variation occurs when the variation indication amount is equal to or larger than a predetermined determination reference value. Further, an example is shown in which the switching unit 6 switches to a setting for obtaining the available output power by using the minimum value (minimum cell voltage, minimum SOC, minimum OCV) when a variation occurs. However, the switching unit 6 may also set to further limit the available output power based on the magnitude of the variation indication amount (cell voltage difference, SOC difference, OCV difference). For example, the state determination unit 5 obtains a ratio of a difference value with respect to the variation indication amount. Then, the switching unit 6 may set to change the method for calculating the available output power based on the ratio, that is, the magnitude of the variation indication amount. For example, the switching unit 6 sets to perform calculation for further limiting the available output power according to an increase in the ratio, and the available output power calculation unit obtains the limited available output power according to the setting.

It should be noted that each process shown in the first embodiment to the fifth embodiment is executed based on a program for causing a computer to execute each process procedure. Therefore, the first embodiment to the fifth embodiment can be understood as an embodiment of a program that implement a function of executing each process and a recording medium that stores the program. For example, the program can be stored in a storage device of the vehicle by update when a new function is added to the vehicle. This update can be performed, for example, at the time of periodic inspection of the vehicle. Alternatively, the program may also be updated by wireless communication.

Although the embodiments of the present invention have been described above, the embodiments merely exemplify some of application examples of the present invention and do not intend to limit the technical scope of the present invention to the specific configurations of the embodiments.

**Claims**

1. An output control method for controlling an output power of a secondary battery (1) comprising a plurality of cells on a basis of an available output power, the method **characterized by** comprising:

an indication amount calculation step (S204) of calculating a variation indication amount that correlates with a magnitude of variation in charge and discharge characteristics of the plurality of cells, based on a charge and discharge characteristic indication amount that changes according to change in the charge and discharge characteristic;

a determination step (S204) of determining (a) that the variation occurs when the variation indication amount is equal to or larger than a predetermined determination reference value, and (b) that the variation does not occur when the variation indication amount is smaller than the predetermined determination reference value;

a temperature detection step (S203) of detecting a temperature in the secondary battery (1);

an available output power setting step (S205 - S207) of setting the available output power based on a determination result that the variation occurs, wherein

when the determination step (S204) determines that the variation does not occur, the available output power setting step (S205 - S207) sets a basic available output power (Pout1) determined based on the charge and discharge characteristic indication amount as the available output power; and

when the determination step (S204) determines that the variation occurs, the available output power setting step (S205 - S207) sets a corrected available output power (Pout2) calculated based on the charge and discharge characteristic indication amount and the temperature in the secondary battery (1) and having a value lower than that of the basic available output power (Pout1) as the available output power.

2. The output control method according to claim 1, wherein

the indication amount calculation step (S204) (a) acquires a voltage of each of the plurality of cells as the charge and discharge characteristic indication amount, and (b) calculates a cell voltage difference, which is a difference between an average cell voltage and a minimum cell voltage of the voltages of the plurality of cells, as the variation indication amount;

the determination step (S204) sets a predetermined voltage difference threshold value as the determination reference value; and

the available output power setting step (S205 - S207) (a) calculates the basic available output power (Pout1) based on the average cell voltage, and (b) calculates the corrected available output power (Pout2) based on the minimum cell voltage.

3. The output control method according to claim 1, wherein

the indication amount calculation step (S204) (a) acquires an open circuit voltage of each of the plurality of cells as the charge and discharge characteristic indication amount, and (b) calculates an open circuit voltage difference, which is a difference between an average open circuit voltage and a minimum open circuit voltage of the plurality of cells, as the variation indication amount;

the determination step (204) sets a predetermined open circuit voltage difference threshold value as the determination reference value; and

the available output power setting step (S205 - S207) (a) calcualtes the basic available output power (Pout1) based on the average open circuit voltage, and (b) calculates the corrected available output power (Pout2) based on the minimum open circuit voltage.

4. The output control method according to claim 1, wherein

the indication amount calculation step (S204) (a) acquires a SOC of each of the plurality of cells as the charge and discharge characteristic indication amount, and (b) calculates a SOC difference, which is a difference between an average SOC and a minimum SOC of the plurality of cells, as the variation indication amount,

the determination step (S204) sets a predetermined SOC difference threshold value as the determination reference value; and

the available output power setting step (S205 - S207) (a) calculates the basic available output power (Pout1) based on the average SOC, and (b) calculates the corrected available output power (Pout2) based on the minimum SOC.

5. The output control method according to any one of claims 1 to 4, wherein
the determination step (S204) does not perform a determination as to whether or not the variation occurs when the detected temperature exceeds a predetermined value.

6. The output control method according to any one of claims 1 to 4, further comprising:

a temperature correction step of correcting the detected temperature based on the charge and discharge characteristic indication amount; wherein
the available output power setting step (S205 - S207) obtains the corrected available output power (Pout2) using a temperature corrected by the temperature correction step.

7.   The output control method according to claim 4, further comprising

a temperature correction step of correcting the detected temperature based on the minimum SOC; and
the available output power setting step (S205 - S207) obtains the corrected available output power (Pout2) using a temperature corrected by the temperature correction step.

8.   The output control method according to claim 1, further comprising:

a following performance setting step of setting a degree of following performance of making an actual power of the secondary battery (1) follow the available output power; wherein
the method limits the output power of the secondary battery (1) based on the degree of the following performance; and
when the determination step (S204) determines that the variation occurs, the following performance setting step sets the degree of the following performance to cause the actual power to follow the available output power faster than when the determination step (S204) determines that the variation does not occur.

9.   An output control system for controlling an output power of a secondary battery (1) comprising a plurality of cells, the output control system comprising:

a temperature detection unit (4) configured to detect a temperature in the secondary battery (1); and
a controller (20) configured (i) to acquire a charge and discharge characteristic indication amount that changes according to change in a charge and discharge characteristic of each of the plurality of cells, (ii) to obtain an available output power that is capable of being output by the secondary battery (1) based on the charge and discharge characteristic indication amount, and (iii) to control the output power of the secondary battery (1) based on the available output power;
**characterized in that** the controller (20) is further configured
(iv) to calculate a variation indication amount that correlates with a magnitude of variation in the charge and discharge characteristics of the plurality of cells, based on the charge and discharge characteristic indication amount;
(v) to determine that the variation occurs when the variation indication amount is equal to or larger than a predetermined determination reference value, and that the variation does not occur when the variation indication amount is smaller than the predetermined determination reference value;
(vi) to set a basic available output power (Pout1) based on the charge and discharge characteristic indication amount as the available output power, when the variation is determined as not occurring; and
(vii) to set a corrected available output power (Pout2) calculated based on the charge and discharge characteristic indication amount and the temperature in the secondary battery (1) and having a value lower than that of the basic available output power (Pout1) as the available output power, when the variation is determined as occurring.

**Patentansprüche**

1.   Ausgabesteuerungsverfahren zum Steuern einer Ausgangsleistung einer Sekundärbatterie (1), die mehrere Zellen aufweist, auf der Grundlage einer verfügbaren Ausgangsleistung, wobei das Verfahren **dadurch gekennzeichnet ist, dass** es umfasst:

einen Indikationswertberechnungsschritt (S204), bei dem ein Abweichungsindikationswert berechnet wird, der mit dem Ausmaß der Abweichung der Lade- und Entladeeigenschaften der mehreren Zellen korreliert, basierend auf einem Lade- und Entladeeigenschaftsindikationswert, der sich entsprechend der Änderung der Lade- und Entladeeigenschaft ändert;
einen Bestimmungsschritt (S204) zum Bestimmen, dass (a) die Abweichung auftritt, wenn der Abweichungsindikationswert gleich oder größer als ein vorbestimmter Bestimmungsreferenzwert ist, und dass (b) die Abweichung nicht auftritt, wenn der Abweichungsindikationswert kleiner als der vorbestimmte Bestimmungs-referenzwert ist;

EP 4 145 586 B1

einen Temperaturerfassungsschritt (S203) zum Erfassen einer Temperatur in der Sekundärbatterie (1);
einen Schritt zum Einstellen der verfügbaren Ausgangsleistung (S205 - S207), bei dem die verfügbare Ausgangsleistung auf der Grundlage eines Bestimmungsergebnisses, dass die Abweichung auftritt, eingestellt wird, wobei
wenn der Bestimmungsschritt (S204) bestimmt, dass die Abweichung nicht auftritt, der Schritt zum Einstellen der verfügbaren Ausgangsleistung (S205 - S207) eine verfügbare Basisausgangsleistung (Pout1) einstellt, die auf der Grundlage des Lade- und Entladeeigenschaftenindikationswerts als verfügbare Ausgangsleistung bestimmt wird; und
wenn der Bestimmungsschritt (S204) bestimmt, dass die Abweichung auftritt, der Schritt zum Einstellen der verfügbaren Ausgangsleistung (S205 - S207) eine korrigierte verfügbare Ausgangsleistung (Pout2), die auf der Grundlage des Lade- und Entladeeigenschaftenindikationswerts und der Temperatur in der Sekundärbatterie (1) berechnet wird und einen Wert hat, der niedriger ist als der der verfügbaren Basisausgangsleistung (Pouti), als verfügbare Ausgangsleistung festlegt.

2. Ausgabesteuerungsverfahren gemäß Anspruch 1, wobei

der Indikationswertberechnungsschritt (S204) (a) eine Spannung jeder der mehreren Zellen als Lade- und Entladeeigenschaftenindikationswert erfasst, und (b) eine Zellenspannungsdifferenz, die eine Differenz zwischen einer durchschnittlichen Zellenspannung und einer minimalen Zellenspannung der Spannungen der mehreren Zellen ist, als Abweichungsindikationswert berechnet;
der Bestimmungsschritt (S204) einen vorbestimmten Spannungsdifferenzschwellenwert als Bestimmungsreferenzwert festlegt; und
der Schritt zum Einstellen der verfügbaren Ausgangsleistung (S205 - S207) (a) die verfügbare Basisausgangsleistung (Pout1) auf der Grundlage der durchschnittlichen Zellenspannung berechnet und (b) die korrigierte verfügbare Ausgangsleistung (Pout2) auf der Grundlage der minimalen Zellenspannung berechnet.

3. Ausgabesteuerungsverfahren nach Anspruch 1, wobei

der Indikationswertberechnungsschritt (S204) (a) eine Leerlaufspannung jeder der mehreren Zellen als Lade- und Entladeeigenschaftenindikationswert erfasst, und (b) eine Leerlaufspannungsdifferenz, die eine Differenz zwischen einer durchschnittlichen Leerlaufspannung und einer minimalen Leerlaufspannung der mehreren Zellen ist, als Abweichungsindikationswert berechnet;
der Bestimmungsschritt (204) einen vorbestimmten Schwellenwert für die Leerlaufspannung als Bestimmungsreferenzwert festlegt; und
der Schritt zum Einstellen der verfügbaren Ausgangsleistung (S205 - S207) (a) die verfügbare Basisausgangsleistung (Pout1) auf der Grundlage der durchschnittlichen Leerlaufspannung berechnet, und (b) die korrigierte verfügbare Ausgangsleistung (Pout2) auf der Grundlage der minimalen Leerlaufspannung berechnet.

4. Ausgabesteuerungsverfahren gemäß Anspruch 1, wobei

der Indikationsberechnungsschritt (S204) (a) einen Ladezustand (SOC) jeder der mehreren Zellen als Lade- und Entladeeigenschaftenindikationswert erfasst, und (b) eine SOC-Differenz, die eine Differenz zwischen einem durchschnittlichen SOC und einem minimalen SOC der mehreren Zellen ist, als Abweichungsindikationswert berechnet;
der Bestimmungsschritt (S204) einen vorbestimmten SOC-Differenzschwellenwert als Bestimmungsreferenzwert festlegt; und
der Schritt zum Einstellen der verfügbaren Ausgangsleistung (S205 - S207) (a) die verfügbare Basisausgangsleistung (Pout1) auf der Grundlage des durchschnittlichen SOC berechnet und (b) die korrigierte verfügbare Ausgangsleistung (Pout2) auf der Grundlage des minimalen SOC berechnet.

5. Ausgabesteuerungsverfahren gemäß einem der Ansprüche 1 bis 4, wobei
der Bestimmungsschritt (S204) keine Bestimmung darüber durchführt, ob die Abweichung auftritt, wenn die erfasste Temperatur einen vorbestimmten Wert überschreitet.

6. Ausgabesteuerungsverfahren gemäß einem der Ansprüche 1 bis 4, das ferner umfasst:

einen Temperaturkorrekturschritt zum Korrigieren der erfassten Temperatur auf der Grundlage des Lade- und Entladeeigenschaftenindikationswerts; wobei

der Schritt zum Einstellen der verfügbaren Ausgangsleistung (S205 - S207) die korrigierte verfügbare Ausgangsleistung (Pout2) unter Verwendung einer durch den Temperaturkorrekturschritt korrigierten Temperatur ermittelt.

7. Ausgabesteuerungsverfahren gemäß Anspruch 4, das ferner umfasst

   einen Temperaturkorrekturschritt zum Korrigieren der erfassten Temperatur auf der Grundlage des minimalen SOC; und
   wobei der Schritt zum Einstellen der verfügbaren Ausgangsleistung (S205 - S207) die korrigierte verfügbare Ausgangsleistung (Pout2) unter Verwendung einer durch den Temperaturkorrekturschritt korrigierten Temperatur ermittelt.

8. Ausgabesteuerungsverfahren gemäß Anspruch 1, das ferner umfasst:

   einen Schritt zum Einstellen des Folgeleistungsvermögens, in dem ein Grad des Folgeleistungsvermögens eingestellt wird, mit dem die tatsächliche Leistung der Sekundärbatterie (1) der verfügbaren Ausgangsleistung nachgeführt wird; wobei
   das Verfahren die Ausgangsleistung der Sekundärbatterie (1) auf der Grundlage des Grades des Folgeleistungsvermögens begrenzt; und
   wenn der Bestimmungsschritt (S204) bestimmt, dass die Abweichung auftritt, der Schritt zum Einstellen des Folgeleistungsvermögens den Grad des Folgeleistungsvermögens so einstellt, dass die tatsächliche Leistung der verfügbaren Ausgangsleistung schneller folgt als wenn der Bestimmungsschritt (S204) feststellt, dass die Abweichung nicht auftritt.

9. Ausgabesteuerungssystem zum Steuern einer Ausgangsleistung einer Sekundärbatterie (1), die mehrere Zellen aufweist, wobei das Ausgabesteuerungssystem aufweist:

   eine Temperaturerfassungseinheit (4), die ausgebildet ist, eine Temperatur in der Sekundärbatterie (1) zu erfassen; und
   eine Steuereinheit (20), die ausgebildet ist, (i) einen Lade- und Entladeeigenschaftenindikationswert zu erfassen, der sich entsprechend einer Änderung der Lade- und Entladeeigenschaften jeder der mehreren Zellen ändert, (ii) eine verfügbare Ausgangsleistung, die von der Sekundärbatterie (1) ausgegeben werden kann, auf der Grundlage des Lade- und Entladeeigenschaftenindikationswerts zu ermitteln, und (iii) die Ausgangsleistung der Sekundärbatterie (1) auf der Grundlage der verfügbaren Ausgangsleistung zu steuern;
   **dadurch gekennzeichnet, dass**
   die Steuereinheit (20) ferner ausgebildet ist,
   (iv) einen Abweichungsindikationswert, der mit dem Ausmaß der Abweichung in den Lade- und Entladeeigenschaften der mehreren Zellen korreliert, basierend auf dem Lade- und Entladeeigenschaftslndikationswert zu berechnen;
   (v) zu bestimmen, dass die Abweichung auftritt, wenn der Abweichungsindikationswert gleich oder größer als ein vorbestimmter Bestimmungsreferenzwert ist, und dass die Abweichung nicht auftritt, wenn der Abweichungsindikationswert kleiner als der vorbestimmte Bestimmungsreferenzwert ist;
   (vi) eine verfügbare Basisausgangsleistung (Pout1) auf der Grundlage des Lade- und Entladeeigenschaftenindikationswerts als verfügbare Ausgangsleistung festzulegen, wenn bestimmt wird, dass die Abweichung nicht auftritt; und
   (vii) eine korrigierte verfügbare Ausgangsleistung (Pout2), die auf der Grundlage des Lade- und Entladeeigenschaftenindikationswerts und der Temperatur in der Sekundärbatterie (1) berechnet wird und einen Wert aufweist, der niedriger ist als der der verfügbaren Basisausgangsleistung (Pout1), als verfügbare Ausgangsleistung festzulegen, wenn bestimmt wird, dass die Abweichung auftritt.

## Revendications

1. Procédé de commande de puissance utile permettant de commander une puissance de sortie d'une batterie d'accumulateurs (1) comprenant une pluralité d'éléments sur la base d'une puissance de sortie disponible, le procédé étant **caractérisé en ce qu'**il comprend :

   une étape de calcul de quantité d'indication (S204) consistant à calculer une quantité d'indication de variation qui est corrélée avec une amplitude de variation de caractéristiques de charge et de décharge de la pluralité d'éléments, sur la base d'une quantité d'indication de charge et de décharge qui change en fonction d'un changement de la caractéristique de charge et de décharge ;

une étape de détermination (S204) consistant à déterminer (a) que la variation se produit lorsque la quantité d'indication de variation est supérieure ou égale à une valeur de référence de détermination prédéterminée, et (b) que la variation ne se produit pas lorsque la variation de la quantité d'indication de variation est inférieure à la valeur de référence de détermination prédéterminée ;

une étape de détection de température (S203) consistant à détecter une température dans la batterie d'accumulateurs (1) ;

une étape de réglage de la puissance de sortie disponible (S205 - S207) consistant à régler la puissance de sortie disponible sur la base d'un résultat de détermination du fait que la variation se produit, dans lequel

lorsque l'étape de détermination (S204) détermine que la variation ne se produit pas, l'étape de réglage de la puissance de sortie disponible (S205 - S207) règle une puissance de sortie disponible de base (Pout1) déterminée sur le base de la quantité d'indication de la caractéristique de charge et de décharge en tant que puissance de sortie disponible ; et

lorsque l'étape de détermination (S204) détermine que la variation se produit, l'étape de réglage de la puissance de sortie disponible (S205 - S207) règle une puissance de sortie disponible corrigée (Pout2) calculée sur la base de la quantité d'indication de la caractéristique de charge et de décharge et de la température dans la batterie d'accumulateurs (1) et ayant une valeur inférieure à celle de la puissance de sortie disponible de base (Pout1) en tant que puissance de sortie disponible.

2. Procédé de commande de puissance utile selon la revendication 1, dans lequel

l'étape de calcul de quantité d'indication (S204) (a) acquiert une tension de chacun de la pluralité d'éléments en tant que quantité d'indication de la caractéristique de charge et de décharge, et (b) calcule une différence de tension d'élément, qui est une différence entre une tension d'élément moyenne et une tension d'élément minimale parmi les tensions de la pluralité d'éléments, en tant que quantité d'indication de variation ;

l'étape de détermination (S204) règle une valeur seuil de différence de tension prédéterminée en tant que valeur de référence de détermination ; et

l'étape de réglage de la puissance de sortie disponible (S205 - S207) (a) calcule la puissance de sortie disponible de base (Pout1) sur la base de la tension d'élément moyenne, et (b) calcule la puissance de sortie disponible corrigée (Pout2) sur la base de la tension d'élément minimale.

3. Procédé de commande de puissance utile selon la revendication 1, dans lequel

l'étape de calcul de quantité d'indication (S204) (a) acquiert une tension de circuit ouvert de chacun de la pluralité d'éléments en tant que quantité d'indication de la caractéristique de charge et de décharge, et (b) calcule une différence de tension de circuit ouvert, qui est une différence entre une tension de circuit ouvert moyenne et une tension de circuit ouvert minimale de la pluralité d'éléments, en tant que quantité d'indication de variation ;

l'étape de détermination (204) règle une valeur seuil de différence de tension de circuit ouvert prédéterminée en tant que valeur de référence de détermination ; et

l'étape de réglage de la puissance de sortie disponible (S205 - S207) (a) calcule la puissance de sortie disponible de base (Pout1) sur la base de la tension de circuit ouvert moyenne, et (b) calcule la puissance de sortie disponible corrigée (Pout2) sur la base de la tension de circuit ouvert minimale.

4. Procédé de commande de puissance utile selon la revendication 1, dans lequel

l'étape de calcul de quantité d'indication (S204) (a) acquiert un état de charge de chacun de la pluralité d'éléments en tant que quantité d'indication de la caractéristique de charge et de décharge, et (b) calcule une différence d'état de charge, qui est une différence entre un état de charge moyen et un état de charge minimal de la pluralité d'éléments, en tant que quantité d'indication de variation,

l'étape de détermination (S204) règle une valeur seuil de différence d'état de charge prédéterminée en tant que valeur de référence de détermination ; et

l'étape de réglage de la puissance de sortie disponible (S205 - S207) (a) calcule la puissance de sortie disponible de base (Pout1) sur la base de l'état de charge moyen, et (b) calcule la puissance de sortie disponible corrigée (Pout2) sur la base de l'état de charge minimal.

5. Procédé de commande de puissance utile selon l'une quelconque des revendications 1 à 4, dans lequel

l'étape de détermination (S204) n'effectue pas de détermination du fait que la variation se produit ou non lorsque la température détectée dépasse une valeur prédéterminée.

6. Procédé de commande de puissance utile selon l'une quelconque des revendications 1 à 4, comprenant en outre :

   une étape de correction de température consistant à corriger la température détectée sur la base de la quantité d'indication de la caractéristique de charge et de décharge ; dans lequel
   l'étape de réglage de la puissance de sortie disponible (S205 - S207) obtient la puissance de sortie disponible corrigée (Pout2) à l'aide d'une température corrigée par l'étape de correction de température.

7. Procédé de commande de puissance utile selon la revendication 4, comprenant en outre :

   une étape de correction de température consistant à corriger la température détectée sur la base de l'état de charge minimal ; et
   l'étape de réglage de la puissance de sortie disponible (S205 - S207) obtient la puissance de sortie disponible corrigée (Pout2) à l'aide d'une température corrigée par l'étape de correction de température.

8. Procédé de commande de puissance utile selon la revendication 1, comprenant en outre :

   une étape de réglage de performance de suivi consistant à régler un degré de performance de suivi consistant à faire en sorte qu'une puissance réelle de la batterie d'accumulateurs (1) suive la puissance de sortie disponible ; dans lequel
   le procédé limite la puissance de sortie de la batterie d'accumulateurs (1) sur la base du degré de la performance de suivi ; et
   lorsque l'étape de détermination (S204) détermine que la variation se produit, l'étape de réglage de la performance de suivi règle le degré de la performance de suivi afin d'amener la puissance réelle à suivre la puissance de sortie disponible plus rapidement que lorsque l'étape de détermination (S204) détermine que la variation ne se produit pas.

9. Système de commande de sortie permettant de commander une puissance de sortie d'une batterie d'accumulateurs (1) comprenant une pluralité d'éléments, le système de commande de sortie comprenant :

   une unité de détection de température (4) configurée pour détecter une température dans la batterie d'accumulateurs (1) ; et
   un module de commande (20) configuré (i) pour acquérir une quantité d'indication de la caractéristique de charge et de décharge qui change en fonction d'un changement d'une caractéristique de charge et de décharge de chacun de la pluralité d'éléments, (ii) pour obtenir une puissance de sortie disponible qui est capable d'être produite en sortie par la batterie d'accumulateurs (1) sur la base de la quantité d'indication de la caractéristique de charge et de décharge, et (iii) pour commander la puissance de sortie de la batterie d'accumulateurs (1) sur la base de la puissance de sortie disponible ;
   **caractérisé en ce que** le module de commande (20) est en outre configuré
   (iv) pour calculer une quantité d'indication de variation qui est corrélée avec une amplitude de variation des caractéristiques de charge et de décharge de la pluralité d'éléments, sur la base de la quantité d'indication de la caractéristique de charge et de décharge ;
   (v) pour déterminer que la variation se produit lorsque la quantité d'indication de variation est supérieure ou égale à une valeur de référence de détermination prédéterminée, et que la variation ne se produit pas lorsque la variation de la quantité d'indication de variation est inférieure à une valeur de référence de détermination prédéterminée ;
   (vi) pour régler une puissance de sortie disponible de base (Pout1) sur la base de la quantité d'indication de la caractéristique de charge et de décharge en tant que puissance de sortie disponible, lorsqu'il est déterminé que la variation ne se produit pas ; et
   (vii) pour régler une puissance de sortie disponible corrigée (Pout2) calculée sur la base de la quantité d'indication de la caractéristique de charge et de décharge et de la température dans la batterie d'accumulateurs (1) et ayant une valeur inférieure à celle de la puissance de sortie disponible de base (Pout1) en tant que puissance de sortie disponible, lorsqu'il est déterminé que la variation se produit.

FIG. 1

FIG. 2

FIG. 3

FIG. 4

FIG. 5

FIG. 6

START

S201
DETECT VOLTAGE OF EACH
CELL OF LITHIUM ION BATTERY

S202
DETECT CURRENT FLOWING
THROUGH LITHIUM ION BATTERY

S203
DETECT TEMPERATURE INSIDE
BATTERY PACK OF LITHIUM ION BATTERY

S204
AVERAGE CELL
VOLTAGE - MINIMUM CELL VOLTAGE
≥ PREDETERMINED VALUE?

Yes

No

S205
CALCULATE OCV BASED ON
AVERAGE CELL VOLTAGE, CURRENT,
AND TEMPERATURE

S206
CALCULATE OCV BASED ON
MINIMUM CELL VOLTAGE, CURRENT,
AND TEMPERATURE

S207
CALCULATE AVAILABLE OUTPUT POWER
BASED ON OCV AND TEMPERATURE

S208
LIMIT UPPER LIMIT OF POWER
TAKEN OUT FROM LITHIUM ION BATTERY
TO AVAILABLE OUTPUT POWER

S209
DISPLAY AVAILABLE OUTPUT POWER AND
ACTUAL POWER CONSUMPTION ON METER

END

FIG. 7

FIG. 8

START

S301 — DETECT VOLTAGE OF EACH
CELL OF LITHIUM ION BATTERY

S302 — DETECT CURRENT FLOWING
THROUGH LITHIUM ION BATTERY

S303 — DETECT TEMPERATURE INSIDE
BATTERY PACK OF LITHIUM ION BATTERY

S304 — CALCULATE AVERAGE
OCV AND MINIMUM OCV

S305 — AVERAGE OCV - MINIMUM OCV
≥ PREDETERMINED VALUE?

Yes

No

S306 — CALCULATE AVAILABLE
OUTPUT POWER BASED ON AVERAGE
OCV AND TEMPERATURE

S307 — CALCULATE AVAILABLE
OUTPUT POWER BASED ON MINIMUM
OCV AND TEMPERATURE

S308 — LIMIT UPPER LIMIT OF POWER TAKEN
OUT FROM LITHIUM ION BATTERY TO
AVAILABLE OUTPUT POWER

S309 — DISPLAY AVAILABLE OUTPUT POWER AND
ACTUAL POWER CONSUMPTION ON METER

END

FIG. 9

FIG. 10

FIG. 11

FIG. 12

FIG. 13

| STATE DIFFERENCE | MINIMUM SOC | OUTPUT LIMIT FOLLOWING PERFORMANCE | OBJECT |
|---|---|---|---|
| NOT DETERMINED | — | FOLLOW AT PREDETERMINED POWER CHANGE RATE | EMPHASIZE OPERABILITY |
| DETERMINED | 30~60 | 3 TIMES FASTER THAN WHEN STATE DIFFERENCE IS NOT DETERMINED | SUPPRESS CAPACITY DROP AND VOLTAGE DROP |
| DETERMINED | 0~30 | IMMEDIATELY FOLLOW | SUPPRESS CAPACITY DROP AND VOLTAGE DROP |

# FIG. 14

FIG. 15

```
                    ┌─────────────┐
                    │    START    │
                    └──────┬──────┘
S401                       ▼
      ┌──────────────────────────────────────┐
      │      DETECT VOLTAGE OF EACH           │
      │     CELL OF LITHIUM ION BATTERY       │
      └──────────────────┬───────────────────┘
S402                     ▼
      ┌──────────────────────────────────────┐
      │      DETECT CURRENT FLOWING           │
      │     THROUGH LITHIUM ION BATTERY       │
      └──────────────────┬───────────────────┘
S403                     ▼
      ┌──────────────────────────────────────┐
      │   DETECT TEMPERATURE INSIDE BATTERY   │
      │    PACK OF LITHIUM ION BATTERY        │
      └──────────────────┬───────────────────┘
S404                     ▼
      ┌──────────────────────────────────────┐
      │         CALCULATE AVERAGE             │
      │       SOC AND MINIMUM SOC             │
      └──────────────────┬───────────────────┘
S405                     ▼
      ╱────────────────────────────────────╲        S407
      │  AVERAGE SOC - MINIMUM SOC          │ Yes    ┌──────────────────────┐
      │  ≥ PREDETERMINED VALUE?             │───────▶│  CALCULATE OCV BASED  │
      ╲────────────────────────────────────╱        │   ON MINIMUM SOC      │
                    │ No                             └──────────┬───────────┘
S406                ▼                           S408            ▼
      ┌──────────────────────────┐                   ┌──────────────────────────┐
      │   CALCULATE OCV BASED     │                   │   SET DEGREE OF POWER     │
      │    ON AVERAGE SOC         │                   │ LIMIT FOLLOWING PERFORMANCE│
      └──────────┬───────────────┘                   │   BASED ON MINIMUM SOC    │
S409             ▼◀──────────────────────────────────└──────────────────────────┘
      ┌──────────────────────────┐
      │   CORRECT TEMPERATURE     │
      │    BASED ON MINIMUM SOC   │
      └──────────┬───────────────┘
S410             ▼
      ┌────────────────────────────────────────┐
      │ CALCULATE INTERNAL RESISTANCE BASED     │
      │   ON TEMPERATURE CORRECTION VALUE       │
      └──────────┬─────────────────────────────┘
S411             ▼
      ┌────────────────────────────────────────┐
      │   CALCULATE AVAILABLE OUTPUT POWER      │
      │ BASED ON OCV, INTERNAL RESISTANCE, AND  │
      │ CELL VOLTAGE LOWER LIMIT TARGET VALUE   │
      └──────────┬─────────────────────────────┘
S412             ▼
      ┌────────────────────────────────────────┐
      │  LIMIT UPPER LIMIT OF POWER TAKEN OUT   │
      │  FROM LITHIUM ION BATTERY TO AVAILABLE  │
      │ OUTPUT POWER ACCORDING TO POWER LIMIT   │
      │ FOLLOWING PERFORMANCE SETTING VALUE     │
      └──────────┬─────────────────────────────┘
S413             ▼
      ┌────────────────────────────────────────┐
      │ DISPLAY AVAILABLE OUTPUT POWER AND      │
      │ ACTUAL POWER CONSUMPTION ON METER       │
      └──────────┬─────────────────────────────┘
                 ▼
          ┌─────────────┐
          │     END     │
          └─────────────┘
```

# FIG. 16

FIG. 17

| Pout | TEMPERATURE | | | | | | | | |
|------|-----|-----|-----|-----|-----|-----|-----|-----|-----|
| SOC | −30 | −20 | −10 | 0 | 10 | 25 | 35 | 45 | 60 |
| 100 | 0 | 70 | 85 | 100 | 100 | 100 | 100 | 100 | 100 |
| 90 | 0 | 65 | 80 | 100 | 100 | 100 | 100 | 100 | 100 |
| 80 | 0 | 60 | 75 | 90 | 100 | 100 | 100 | 100 | 100 |
| 70 | 0 | 55 | 70 | 80 | 100 | 100 | 100 | 100 | 100 |
| 60 | 0 | 50 | 65 | 75 | 100 | 100 | 100 | 100 | 100 |
| 50 | 0 | 45 | 60 | 70 | 100 | 100 | 100 | 100 | 100 |
| 40 | 0 | 40 | 50 | 65 | 100 | 100 | 100 | 100 | 100 |
| 30 | 0 | 30 | 40 | 60 | 90 | 100 | 100 | 100 | 100 |
| 20 | 0 | 20 | 30 | 50 | 70 | 80 | 80 | 80 | 100 |
| 10 | 0 | 10 | 20 | 30 | 40 | 40 | 40 | 40 | 50 |
| 0 | 0 | 0 | 0 | 0 | 0 | 0 | 0 | 0 | 0 |

# FIG. 18

**EP 4 145 586 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007165211 A

- WO 2012169063 A1